# EUROPEAN PATENT SPECIFICATION

(11) **EP 3 148 238 B1**
(45) Date of publication and mention of the grant of the patent: **26.06.2019**
(21) Application number: 14893141.3
(22) Date of filing: 19.09.2014
(51) Int. Cl.: H04W 16/14, H04W 52/24, H04W 16/10

(54) **INTERFERENCE CONTROL METHOD AND APPARATUS, AND NETWORK ELEMENT DEVICE**
VERFAHREN UND VORRICHTUNG ZUR INTERFERENZSTEUERUNG SOWIE NETZWERKELEMENTVORRICHTUNG
PROCÉDÉ ET APPAREIL DE RÉGULATION DU BROUILLAGE, ET DISPOSITIF ÉLÉMENT DE RÉSEAU

(30) Priority: 30.05.2014 WO PCT/CN2014/078939
(43) Date of publication of application: 29.03.2017
(73) Proprietor: HUAWEI TECHNOLOGIES CO., LTD., Shenzhen Guangdong 518129 (CN)
(72) Inventor: JIA, Xiaoqian, Shenzhen Guangdong 518129 (CN); ZHOU, Guohua, Shenzhen Guangdong 518129 (CN); WANG, Jun, Shenzhen Guangdong 518129 (CN); DENG, Tianle, Shenzhen Guangdong 518129 (CN)
(74) Representative: Epping - Hermann - Fischer
(86) International application number: PCT/CN2014/086973
(87) International publication number: WO 2015/180309

(56) References cited:
- CN-A- 101 977 388
- CN-A- 102 217 355
- US-A1- 2010 248 736
- US-A1- 2013 005 388
- US-A1- 2013 142 129
- US-A1- 2014 044 095

## Description

### TECHNICAL FIELD

The present invention relates to communication technologies and, in particular, to a method and an apparatus for interference control, and a network element device.

### BACKGROUND

With development of mobile communication technologies, a continuous growth of multimedia mobile users, presence of a great number of different mobile services and a continuous growth of mobile broadband data services pose a challenge to a frequency spectrum resource of an existing mobile network. Thus, it needs to plan a new strategy to utilize existing frequency spectrum resources more efficiently, reallocation of a frequency spectrum in the prior art is an effective solution.

Taking a universal mobile telecommunication system (UMTS, Universal Mobile Telecommunication System) radio access technology (RAT) and a long term evolution (LTE, Long Term Evolution) RAT in a communication system as an example: for a mobile network using the UMTS RAT, reallocation of a UMTS frequency spectrum may gradually stop using a part of frequency spectrum resources used for the UMTS RAT currently, and reallocate it to the LTE RAT which has a higher frequency spectral efficiency. However, due to restrictions such as a long term upgrading process of a terminal, a UMTS network cannot be closed immediately, thus, during a period of time, the LTE RAT needs to coexist with the UMTS RAT, that is to say, a communication system based on the LTE RAT and a communication system based on the UMTS RAT need to share the frequency spectrum resources.

In a scenario of inter-RAT common deployment, for a plurality of inter-RAT cells sharing a same section of shared frequency spectrum, a signal transmitted by a cell based on one RAT on the shared frequency spectrum may be taken as an uplink interfering signal for an adjacent cell based on other RATs. Due to different interference levels between inter-RAT adjacent cells, a cell may encounter a sudden elevation of interference from an adjacent cell during a RAT conversion process, resulting in dropped calls or a service quality degradation of a UE. For instance, a cell based on the LTE RAT needs to overcome interference from a cell based on the UMTS RAT, however, since the LTE RAT itself lacks a mechanism for controlling base station received power, the cell based on the LTE RAT will be caused to elevate transmitted power, thereby causing a greater interference for a cell based on the UMTS mechanism. In order to keep a certain level of a signal to interference plus noise ratio (SINR, Signal to Interference plus Noise Ratio)/a signal to interference ratio (SIR, Signal to Interference Ratio), both RATs will continue to elevate their own transmitted power, thereby causing a problem of uplink power ramp.

Thus, in the prior art, it not only needs to perform interference control for cells within a single RAT, for instance, both a cell based on the UMTS RAT and a cell based on the LTE RAT will perform interference control for a cell within their own RAT respectively, cell interference is controlled by controlling a cell received total wide band power (RTWP, Received Total Wide Band Power) value within the UMTS RAT, inter-cell interference is controlled via an overload indication (OI, Overload Indication) mechanism within the LTE RAT, moreover, in order to improve reliability and stability of the frequency spectrum sharing between different RATs, as well as to avoid a power ramp of a current cell due to elevation of interference from an adjacent cell, but also needs to control interference between inter-RAT cells. In the prior art, the interference control between inter-RATs has not been implemented.

Document "INTER-RADIO ACCESS TECHNOLOGY INTERFERENCE COORDINATION FOR MULTI-STANDARD RADIO ACCESS NETWORKS" (Xiao-Gong Li et al, US 2014/0044095 A1) discloses a method and system for coordinated interference suppres¬sion in a communication system (See Abstract).

Document "INTER-SYSTEM INTERFRENCE CONTROL" (Jari Yrjana Hulkkoneu et al, US 2010/0248736 A1) discloses a solution for controlling interference in a cellular telecommunication system (See Abstract).

### SUMMARY

Methods for interference control, an interfered network element and an interfering network element according to the independent claims are provided. Dependent claims provide preferred embodiments. Embodiments of the present invention provide a method and an apparatus for interference control, and a network element device, which are used to solve a problem in the prior art that there is too much interference between inter-RAT adjacent cells because interference control
between inter-RAT communication systems is not implemented.

In a first aspect, a method for a first network element to perform interference control is provided, including:
determining, by the first network element, an interfered sub-band from a bandwidth occupied by the first network element;
transmitting an interference control request message to an inter-RAT network element, where, the interference control request message is used for requesting the inter-RAT network element to perform interference control to the interfered sub-band; the interfered sub-band is occupied by the inter-RAT network element; a communication system in which the inter-RAT network element locates and a communication system in which the first network element locates are inter-RAT communication systems; and
receiving an interference control response message replied by a network element capable of adjusting transmitted power of the interfered sub-band in the inter-RAT network elemen.

With reference to the first aspect, in a first possible implementation, an information element IE in the interference control request message includes one or more of the following cells: a message type, a bandwidth range of an interfered sub-band requested to be controlled, an amount of interference on the interfered sub-band, an amount of interference or an interference level that needs to be controlled by a requested network element on the interfered sub-band, and a counting unit used by the requested network element when reporting a controlled amount of interference.

With reference to the first aspect, or with reference to the first possible implementation of the first aspect, in a second possible implementation, an information element IE in the interference control response message includes one or more of the following cells: a message type, an adjustment amount performed by a requested network element to transmitted power of an interfered sub-band, whether the requested network element performs an adjustment to the transmitted power of the interfered sub-band, and a range of an interfered sub-band adjusted by the requested network element.

With reference to the first aspect, or with reference to the first possible implementation of the first aspect, in a third possible implementation, the transmitting, by the first network element, the interference control request message to the inter-RAT network element specifically includes: transmitting, by the first network element, the interference control request message to the inter-RAT network element via a direct interface with the inter-RAT network element; or transmitting, by the first network element, the interference control request message to the inter-RAT network element via an operation administration and maintenance OAM that has a connection relationship with both a communication system in which the first network element locates and a communication system in which the inter-RAT network element locates; or transmitting, by the first network element, the interference control request message to the inter-RAT network element via a core network node that has a connection relationship with both the first network element and the inter-RAT network element, wherein, the interference control request message is carried by a radio access network information management RIM message.

In a second aspect, a method for interference control is provided, including:
determining, by a first network element, an interfered network element in an inter-RAT communication system, wherein, the first network element is a single radio access network controller SRC that is configured to allocate a resource occupied by a network element in the inter-RAT communication system;
determining an interfering network element that locates in the inter-RAT communication system from the interfered network element and produces interference to the interfered network element; and
transmitting an interference control request message to the interfering network element, wherein, the interference control request message is used for requesting to perform interference control to a designated sub-band occupied by the interfering network element.

With reference to the second aspect, in a first possible implementation, when the interfering network element cannot be determined, transmitting an interference control request message to a network element in an inter-RAT communication system that has at least one of the following relationships with the interfered network element: a network element in an inter-RAT communication system that has a neighborhood relationship with the interfered network element; a network element in an inter-RAT communication system that has a connection relationship with the interfered network element, where, the interference control request message is used for requesting to perform interference control to a designated sub-band occupied by a network element receiving the interference request message.

With reference to the second aspect, in a second possible implementation, after the transmitting the interference control request message to the interfering network element, further including: receiving an interference control response message replied by a network element capable of adjusting transmitted power of the occupied designated sub-band in the interfering network element.

With reference to the first possible implementation of the first aspect, in a third possible implementation, after the transmitting the interference control request message to the interfering network element, further including: receiving an interference control response message replied by the network element receiving the interference request message.

With reference to the second aspect, or with reference to any possible implementation of the second aspect, in a fourth possible implementation, the determining, by the first network element, the interfered network element in the inter-RAT communication system specifically includes: transmitting, by the first network element, an interference measurement request message to a network element in a communication system governed by the first network element, wherein, the interference measurement request message is used for requesting a power parameter of the designated sub-band occupied by the governed network element, wherein, the power parameter comprises at least one of a received power and a received interference power; receiving an interference measurement response message transmitted by the governed network element, where, the interference measurement response message is used by the governed network element to report the power parameter of the designated sub-band occupied by the governed network element as measured; and determining a network element that is in compliance with a preset interference determining condition and in the governed network element as the interfered network element according to the received power parameter of the designated sub-band occupied by the governed network element as measured by the governed network element.

With reference to the fourth possible implementation of the second aspect, in a fifth possible implementation, an information element IE in the interference measurement request message includes one or more of the following cells: a message type, a bandwidth range of a designated sub-band occupied by a requested network element requested to be reported, and a counting unit used by a requested network element when reporting the power parameter of the occupied designated sub-band; an information element IE in the interference measurement response message includes: a message type and a power parameter of an occupied designated sub-band measured by the requested network element, where, the occupied designated sub-band measured by the requested network element is the designated sub-band requested in the interference measurement request message.

With reference to the fifth possible implementation of the second aspect, in a sixth possible implementation, the information element IE in the interference measurement response message further includes: a segmenting strength of the occupied designated sub-band measured by the requested network element.

With reference to the second aspect, or with reference to the first possible implementation of the second aspect, or with reference to the second possible implementation of the second aspect, or with reference to the third possible implementation of the second aspect, in a seventh possible implementation, the determining, by the first network element, the interfered network element in the inter-RAT communication system specifically includes: transmitting, by the first network element, an interference measurement request message to a network element in a communication system governed by the first network element, wherein, the interference measurement request message is used for requesting the governed network element to report a power parameter of the occupied designated sub-band via an interference measurement report message, wherein, the power parameter comprises at least one of a received power and a received interference power; receiving the interference measurement report message transmitted by the governed network element according to a preset receiving rule; and determining a network element that is in compliance with a preset interference determining condition and is in the governed network element as the interfered network element according to the power parameter of the designated sub-band occupied by the governed network element which is measured by the governed network element and is carried in the received interference measurement report message.

With reference to the seventh possible implementation of the second aspect, in an eighth possible implementation, an information element IE in the interference measurement request message includes one or more of the following cells: a message type, a bandwidth range of a designated sub-band occupied by a requested network element requested to be reported, and a counting unit used by a requested network element when reporting the power parameter of the occupied designated sub-band; an information element IE in the interference measurement report message includes: a message type and a power parameter of an occupied designated sub-band measured by the requested network element, where, the occupied designated sub-band measured by the requested network element is the designated sub-band requested in the interference measurement request message.

With reference to the eighth possible implementation of the second aspect, in a ninth possible implementation, the information element IE in the interference measurement report message further includes: a segment granularity of the occupied designated sub-band measured by the requested network element.

With reference to the second aspect, or with reference to the first possible implementation of the second aspect, or with reference to the second possible implementation of the second aspect, or with reference to the third possible implementation of the second aspect, in a tenth possible implementation, the determining, by the first network element, the interfered network element in the inter-RAT communication system specifically includes: receiving, by the first network element, an interference control request message transmitted by any network element in a communication system governed by the first network element, wherein, the interference control request message is used for requesting to perform interference control to an interfered sub-band occupied by the any network element; and determining the any network element as the interfered network element.

With reference to the second aspect, or with reference to the first possible implementation of the second aspect, in an eleventh possible implementation, an information element IE in the interference control request message includes one or more of the following cells: a message type, a bandwidth range of a designated sub-band occupied by a requested network element requested to be controlled, an amount of interference on the interfered sub-band, an amount of interference or an interference level that needs to be controlled by the requested network element on the occupied designated sub-band, and a counting unit used by the requested network element when reporting the amount of interference on an occupied designated sub-band as controlled.

With reference to the eleventh possible implementation of the second aspect, in a twelfth possible implementation, the amount of interference on the interfered sub-band is specifically one of a total interference power value on the interfered sub-band, a total received power value on the interfered sub-band, a quantization level of a total interference intensity on the interfered sub-band, and a quantization level of a total receiving intensity on the interfered sub-band. With reference to the eleventh possible implementation of the second aspect, or with reference to the twelfth possible implementation of the second aspect, in a thirteenth possible implementation, the amount of interference that needs to be controlled by the requested network element on the occupied designated sub-band is specifically: a preset threshold value of maximum transmitted power of the requested network element on the occupied designated sub-band; or a reduced amount of transmitted power that needs to be reduced by the requested network element on the occupied designated sub-band; or a transmitted power value after a reduction that needs to be performed by the requested network element on the occupied designated sub-band.

With reference to the second possible implementation of the second aspect, or with reference to the third possible implementation of the second aspect, in a fourteenth possible implementation, an information element IE in the interference control response message includes one or more of the following cells: a message type, an adjustment amount performed by a requested network element to transmitted power of the occupied designated sub-band; or an information element IE in the interference control response message includes: a message type, a range of the interfered sub-band adjusted by the requested network element, whether the requested network element performs an adjustment to the transmitted power of the interfered sub-band, and amount adjusted by the requested network element to the transmitted power of the interfered sub-band.

With reference to the fourteenth possible implementation of the second aspect, in a fifteenth possible implementation, the adjustment amount performed by the requested network element to the transmitted power of the interfered sub-band is specifically: an amount adjusted by the requested network element to the transmitted power of the interfered sub-band; or an amount after the adjustment is performed by the requested network element to the transmitted power of the interfered sub-band.

In a third aspect, a method for a second network element to perform interference control is provided, including:
receiving, by the second network element, an interference control request message transmitted by a first network element, where the interference control request message is used for requesting to perform interference control to a designated sub-band occupied by the second network element; the designated sub-band is occupied by the first network element;
performing, by the second network element, at least one of the following operations:
   adjusting, within a preset range, transmitted power of the occupied designated sub-band that has been allocated by the second network element; allocating, within a preset range, the transmitted power of the designated sub-band occupied by the second network element, where, the first network element and the second network element are network elements in inter-RAT communication systems respectively; and
   transmitting an interference control response message to the first network element.

With reference to the third aspect, in a first possible implementation, an information element IE in the interference control request message includes one or more of the following cells: a message type, a bandwidth range of the designated sub-band occupied by a requested network element requested to be controlled, an amount of interference on the interfered sub-band, an amount of interference or an interference level that needs to be controlled by the requested network element on the occupied designated sub-band, and a counting unit used by the requested network element when reporting the amount of interference of an occupied designated sub-band as adjusted.

With reference to the third aspect, in a second possible implementation, an information element IE in the interference control response message includes: a message type, a bandwidth range of the occupied designated sub-band adjusted by the requested network element, adjustment amount performed to transmitted power of the occupied designated sub-band, and whether the requested network element performs an adjustment to the transmitted power of the interfered sub-band.

With reference to the third aspect, in a third possible implementation, one or more of the following manners are used to adjust, within the preset range, the transmitted power of an occupied designated sub-band that has been allocated by the second network element: for a terminal which locates between a cell governed by the second network element and a cell governed by an interfered network element, locates at an edge of the cell governed by the second network element, and occupies a designated sub-band, reducing transmitted power of the terminal so that the transmitted power of the terminal is less than a preset maximum transmitted power threshold value or the transmitted power of the terminal is reduced by a preset value; for a terminal within a cell governed by the second network element, adjusting transmitted power of a terminal so that transmitted power of the terminal is less than a preset maximum transmitted power threshold value; for terminals which locate between a cell governed by the second network element and a cell governed by an interfered network element, locate at an edge of the cell governed by the second network element, and occupy the designated sub-band, reducing an amount of the terminals scheduled at a same time; when the second network element is a network element in an LTE RAT communication system, for a terminal which locates between a cell governed by the second network element and a cell governed by an interfered network element, locates at the cell governed by the second network element, and occupies the designated sub-band, performing at least one of the following operations when performing data transmission with the terminal: reducing transmitted power of each resource block carrying data, and increasing amount of resource blocks used for carrying data;
one or more of the following manners are used to allocate, within the preset range, transmitted power of the designated sub-band occupied by the second network element: for a terminal in a cell governed by the second network element, when it needs to allocate a designated sub-band for the terminal, controlling transmitted power of the terminal on the designated sub-band to be no more than a preset maximum transmitted power threshold value; for terminals which locate between a cell governed by the second network element and a cell governed by an interfered network element and are in a cell governed by the second network element, allocating a designated sub-band for a terminal satisfying at least one of the following conditions for use: a cell center terminal of which transmitted power is less than a preset power threshold value, a terminal having a distance which is no less than a preset distance threshold value from an interfered network element, and a terminal having a path loss difference, between a path loss to the interfered network element and a path loss to a cell in which the terminal locates, which is greater than a preset threshold, where, the preset distance threshold value or the preset threshold is used for ensuring that there is no interference to the interfered network element when a signal transmitted from the terminal is transmitted to the interfered network element; when the interference control request message also carries information of a period of time that a requested network element needs to perform interference control to an occupied designated sub-band, for a terminal which locates in a cell governed by the second network element, allocate the designated sub-band for a terminal of which transmitted power is less than a preset power threshold value for use in the period of time that the interference control is needed.

In a fourth aspect, an interfered network element is provided, including:
a determining module, configured to determine an interfered sub-band from a bandwidth occupied by the determining module;
a transmitting module, configured to transmit an interference control request message to an inter-RAT network element, where, the interference control request message is used for requesting the inter-RAT network element to perform interference control to the interfered sub-band determined by the determining module; the interfered sub-band is occupied by the inter-RAT network element; a communication system in which the inter-RAT network element locates and a communication system in which the apparatus locates are inter-RAT communication systems; and
a receiving module, configured to receive an interference control response message replied by a network element capable of adjusting transmitted power of the interfered sub-band in the inter-RAT network element for the interference control request message transmitted by the transmitting module.

With reference to the fourth aspect, in a first possible implementation, an information element IE in the interference control request message transmitted by the transmitting module includes one or more of the following cells: a message type, a bandwidth range of an interfered sub-band requested to be controlled, an amount of interference on the interfered sub-band, an amount of interference or an interference level that needs to be controlled by a requested network element on the interfered sub-band, and a counting unit used by the requested network element when reporting a controlled amount of interference.

With reference to the fourth aspect, or with reference to the first possible implementation of the fourth aspect, in a second possible implementation, an information element IE in the interference control response message received by the receiving module includes one or more of the following cells: a message type, an adjustment amount performed by a requested network element to transmitted power of an interfered sub-band, whether the requested network element performs an adjustment to the transmitted power of the interfered sub-band, and a range of an interfered sub-band adjusted by the requested network element.

With reference to the fourth aspect, or with reference to the first possible implementation of the fourth aspect, in a third possible implementation, the transmitting module is specifically configured to transmit the interference control request message to the inter-RAT network element via a direct interface with the inter-RAT network element; or transmit the interference control request message to the inter-RAT network element via an operation administration and maintenance OAM that has a connection relationship with both a communication system in which the transmitting module locates and a communication system in which the inter-RAT network element locates; or transmit the interference control request message to the inter-RAT network element via a core network node that has a connection relationship with both the transmitting module and the inter-RAT network element, where, the interference control request message is carried by a radio access network information management RIM message.

In a fifth aspect, an apparatus for interference control is provided, including:
a first determining module, configured to determine an interfered network element in an inter-RAT communication system;
a second determining module, configured to determine an interfering network element that locates in the inter-RAT communication systems from the interfered network element determined by the first determining module and produces interference to the interfered network element; and
a transceiving module, configured to transmit an interference control request message to the interfering network element determined by the second determining module, where, the interference control request message is used for requesting to perform interference control to a designated sub-band occupied by the interfering network element.

With reference to the fifth aspect, in a first possible implementation, the transceiving module is further configured to, when the second determining module cannot determine the interfering network element, transmit an interference control message to a network element in an inter-RAT communication system that has at least one of the following relationships with the interfered network element: a network element in an inter-RAT communication system that has a neighborhood relationship with the interfered network element; a network element in an inter-RAT communication system that has a connection relationship with the interfered network element, wherein, the interference control request message is used for requesting to perform interference control to a designated sub-band occupied by a network element receiving the interference request message.

With reference to the fifth aspect, in a second possible implementation, the transceiving module is further configured to receive an interference control response message replied by a network element capable of adjusting transmitted power of the occupied designated sub-band in the interfering network element for the interference control request message transmitted by the transmitting module.

With reference to the first possible implementation of the fifth aspect, in a third possible implementation, the transceiving module is further configured to, after transmitting the interference control request message to the interfering network element, receive an interference control response message replied by the network element receiving the interference request message.

With reference to the fifth aspect, or with reference to the first possible implementation of the fifth aspect, or with reference to the second possible implementation of the fifth aspect, or with reference to the third possible implementation of the fifth aspect, in a fourth possible implementation, the transceiving module is further configured to, before the first determining module determines the interfered network element, transmit an interference measurement request message to a network element in an inter-RAT communication system governed by a device in which the apparatus locates; receive an interference measurement response message transmitted by the governed network element for the interference measurement request message, where, the interference measurement request message is used for requesting a power parameter of the designated sub-band occupied by the governed network element, where, the power parameter includes at least one of a received power and a received interference power, and the interference measurement response message is used by the governed network element to report the power parameter of the designated sub-band occupied by the governed network element as measured; and the first determining module is specifically configured to, determine a network element that is in compliance with a preset interference determining condition and in the governed network element as the interfered network element according to the power parameter of the designated sub-band occupied by the governed network element which is measured by the governed network element and is received by the transceiving module.

With reference to the fourth possible implementation of the fifth aspect, in a fifth possible implementation, an information element IE in the interference measurement request message transmitted by the transceiving module includes one or more of the following cells: a message type, a bandwidth range of a designated sub-band occupied by a requested network element requested to be reported, and a counting unit used by the requested network element when reporting the power parameter of the occupied designated sub-band; an information element IE in the interference measurement response message received by the transceiving module includes: a message type and a power parameter of an occupied designated sub-band measured by the requested network element, where, the occupied designated sub-band measured by the requested network element is the designated sub-band requested in the interference measurement request message.

With reference to the fifth possible implementation of the fifth aspect, in a sixth possible implementation, the information element IE in the interference measurement response message received by the transceiving module further includes: a segment granularity of the occupied designated sub-band measured by the requested network element.

With reference to the fifth aspect, or with reference to the first possible implementation of the fifth aspect, or with reference to the second possible implementation of the fifth aspect, or with reference to the third possible implementation of the fifth aspect, in a seventh possible implementation, the transceiving module is further configured to, before the first determining module determines the interfered network element, transmit an interference measurement request message to a network element in a communication system governed by a device in which the apparatus locates; receive an interference measurement report message transmitted by the governed network element for the interference measurement request message according to a preset receiving rule, where, the interference measurement request message is used for requesting the governed network element to report a power parameter of the occupied designated sub-band via the interference measurement report message, where, the power parameter includes at least one of a received power and a received interference power; and the first determining module is specifically configured to, determine a network element that is in compliance with a preset interference determining condition and is in the governed network element as the interfered network element according to the power parameter of the designated sub-band occupied by the governed network element which is measured by the governed network element and is carried in the interference measurement report message received by the transceiving module.

With reference to the seventh possible implementation of the fifth aspect, in an eighth possible implementation, an information element IE in the interference measurement request message transmitted by the transceiving module includes one or more of the following cells: a message type, a bandwidth range of a designated sub-band occupied by a requested network element requested to be reported, and a counting unit used by the requested network element when reporting the power parameter of the occupied designated sub-band; an information element IE in the interference measurement report message received by the transceiving module includes: a message type and a power parameter of an occupied designated sub-band measured by the requested network element, where, the occupied designated sub-band measured by the requested network element is the designated sub-band requested in the interference measurement request message.

With reference to the eighth possible implementation of the fifth aspect, in a ninth possible implementation, the information element IE in the interference measurement report message received by the transceiving module further includes: a segment granularity of the occupied designated sub-band measured by the requested network element.

With reference to the fifth aspect, or with reference to the first possible implementation of the fifth aspect, or with reference to the second possible implementation of the fifth aspect, or with reference to the third possible implementation of the fifth aspect, in a tenth possible implementation, the transceiving module is further configured to receive an interference control request message transmitted by any network element in a communication system governed by a device in which the apparatus locates, where, the interference control request message is used for requesting to perform interference control to an interfered sub-band occupied by the any network element; and the first determining module is specifically configured to determine the any network element as the interfered network element.

With reference to the fifth aspect, or with reference to the first possible implementation of the fifth aspect, in an eleventh possible implementation, an information element IE in the interference control request message transmitted by the transceiving module includes one or more of the following cells: a message type, a bandwidth range of a designated sub-band occupied by a requested network element requested to be controlled, an amount of interference on the interfered sub-band, an amount of interference or an interference level that needs to be controlled by the requested network element on the occupied designated sub-band, and a counting unit used by the requested network element when reporting the amount of interference of an occupied designated sub-band as controlled.

With reference to the eleventh possible implementation of the fifth aspect, in a twelfth possible implementation, the amount of interference on the interfered sub-band in the interference control request message is specifically one of a total interference power value on the interfered sub-band, a total received power value on the interfered sub-band, a quantization level of a total interference intensity on the interfered sub-band, and a quantization level of a total receiving intensity on the interfered sub-band.

With reference to the eleventh possible implementation of the fifth aspect, or with reference to the twelfth possible implementation of the fifth aspect, in a thirteenth possible implementation, the amount of interference that needs to be controlled by the requested network element on the occupied designated sub-band in the interference control request message is specifically: a preset threshold value of maximum transmitted power of the requested network element on the occupied designated sub-band; or a reduced amount of transmitted power that needs to be reduced by the requested network element on the occupied designated sub-band; or a transmitted power value after a reduction that needs to be performed by the requested network element on the occupied designated sub-band.

With reference to the second possible implementation of the fifth aspect, or with reference to the third possible implementation of the fifth aspect, in a fourteenth possible implementation, an information element IE in the interference control response message received by the transceiving module includes one or more of the following cells: a message type, an adjustment amount performed by a requested network element to transmitted power of the occupied designated sub-band, whether the requested network element performs an adjustment to the transmitted power of the interfered sub-band, and a range of the interfered sub-band adjusted by the requested network element.

With reference to the fourteenth possible implementation of the fifth aspect, in a fifteenth possible implementation, the adjustment amount performed by the requested network element to the transmitted power of the interfered sub-band is specifically: an amount adjusted by the requested network element to the transmitted power of the interfered sub-band; or an amount after the adjustment is performed by the requested network element to the transmitted power of the interfered sub-band.

In a sixth aspect, an interfering network element is provided, including:
a transceiving module, configured to receive an interference control request message transmitted by an interfered network element, where the interference control request message is used for requesting to perform interference control to a designated sub-band occupied by the interfering network element; the designated sub-band is occupied by the interfered network element;
an adjusting module, configured to perform at least one of the following operations: adjust, within a preset range, transmitted power of the occupied designated sub-band that has been allocated by the interfering network element; allocate, within a preset range, the transmitted power of the designated sub-band occupied by the interfering network element, where,
the first network element and the interfering network element are network elements in inter-RAT communication systems respectively; wherein,
the transceiving module is further configured to transmit an interference control response message to the interfered network element for the interference control request message received.

With reference to the sixth aspect, in a first possible implementation, an information element IE in the interference control request message received by the transceiving module includes one or more of the following cells: a message type, a bandwidth range of the designated sub-band occupied by a requested network element requested to be controlled, an amount of interference on the interfered sub-band, an amount of interference or an interference level that needs to be controlled by the requested network element on the occupied designated sub-band, and a counting unit used by the requested network element when reporting the amount of interference of an occupied designated sub-band as adjusted.

With reference to the sixth aspect, in a second possible implementation, an information element IE in the interference control response message transmitted by the transceiving module includes one or more of the following cells: a message type, a bandwidth range of the occupied designated sub-band adjusted by the requested network element, adjustment amount performed to transmitted power of the occupied designated sub-band, and whether the requested network element performs an adjustment to the transmitted power of the interfered sub-band.

With reference to the sixth aspect, in a third possible implementation, the adjusting module is specifically configured to: use one or more of the following manners to adjust, within the preset range, the transmitted power of an occupied designated sub-band that has been allocated by the interfering network element: for a terminal which locates between a cell governed by the interfering network element in which the apparatus locates and a cell governed by an interfered network element, locates at an edge of the cell governed by the interfering network element, and occupies the designated sub-band, reduce transmitted power of the terminal so that the transmitted power of the terminal is less than a preset maximum transmitted power threshold value or the transmitted power of the terminal is reduced by a preset value; for a terminal within a cell governed by the interfering network element, adjust transmitted power of a terminal so that transmitted power of the terminal is less than a preset maximum transmitted power threshold value; for terminals which locate between a cell governed by the interfering network element and a cell governed by an interfered network element, locate at an edge of the cell governed by the interfering network element, and occupy the designated sub-band, reduce an amount of the terminals scheduled at a same time; when the interfering network element is a network element in an LTE RAT communication system, for a terminal which locates between a cell governed by the interfering network element and a cell governed by an interfered network element, locates at the cell governed by the interfering network element, and occupies the designated sub-band, perform at least one of the following operations when performing data transmission with the terminal: reduce transmitted power of each resource block carrying data, and increase amount of resource blocks used for carrying data;
use one or more of the following manners to allocate, within the preset range, transmitted power of the designated sub-band occupied by the interfering network element: for a terminal in a cell governed by the interfering network element, when it needs to allocate a designated sub-band for the terminal, control transmitted power of the terminal on the designated sub-band to be no more than a preset maximum transmitted power threshold value; for terminals in a cell governed by the interfering network element, allocate a designated sub-band for a terminal satisfying at least one of the following conditions for use: a cell center terminal of which transmitted power is less than a preset power threshold value, a terminal having a distance
which is no less than a preset distance threshold value from an interfered network element, and a terminal having a path loss difference, between a path loss to the interfered network element and a path loss to a cell in which the terminal locates, which is greater than a preset threshold, where, the preset distance threshold value or the preset threshold is used for ensuring that there is no interference to the interfered network element when a signal transmitted from the terminal is transmitted to the interfered network element; when the interference control request message also carries time range information of a period of time that a requested network element needs to perform interference control to an occupied designated sub-band, for a terminal which locates in a cell governed by the interfering network element, allocate the designated sub-band for a terminal of which transmitted power is less than a preset power threshold value for use in the period of time that the interference control is needed.

In a seventh aspect, a network element is provided, including: the apparatus for interference control according to the fourth aspect or with reference to any possible implementation of the fourth aspect.

In an eighth aspect, an SRC is provided, including: the apparatus for interference control according to the fifth aspect or with reference to any possible implementation of the fifth aspect.

In a ninth aspect, a network element is provided, including: the apparatus for interference control according to the sixth aspect or with reference to any possible implementation of the sixth aspect.

In a tenth aspect, an apparatus for interference control is provided, including:
a processor, configured to determine an interfered sub-band from a bandwidth occupied by the processor; and
a transmitter, configured to transmit an interference control request message to an inter-RAT network element, where, the interference control request message is used for requesting the inter-RAT network element to perform interference control to the interfered sub-band determined by the processor 1901; a communication system in which the inter-RAT network element locates is an inter-RAT communication system from a communication system in which the apparatus locates.

With reference to the tenth aspect, in a first possible implementation, further including: a receiver; the receiver is configured to receive an interference control response message replied by a network element capable of adjusting transmitted power of the interfered sub-band in the inter-RAT network element for the interference control request message transmitted by the transmitting module.

With reference to the tenth aspect, in a first possible implementation, an information element IE in the interference control request message transmitted by the transmitter includes one or more of the following cells: a message type, a bandwidth range of the interfered sub-band requested to be controlled, an amount of interference on the interfered sub-band, an amount of interference or an interference level that needs to be controlled by a requested network element on the interfered sub-band, and a counting unit used by the requested network element when reporting a controlled amount of interference.

With reference to the first possible implementation of the tenth aspect, or with reference to the second possible implementation of the tenth aspect, in a third possible implementation, an information element IE in the interference control response message received by the receiver includes one or more of the following cells: a message type, an adjustment amount performed by a requested network element to transmitted power of the interfered sub-band, whether the requested network element performs an adjustment to the transmitted power of the interfered sub-band, and a range of the interfered sub-band adjusted by the requested network element. With reference to the tenth aspect, or with reference to the first possible implementation of the tenth aspect, or with reference to the second possible implementation of the tenth aspect, in a fourth possible implementation, the transmitter is specifically configured to transmit the interference control request message to the inter-RAT network element via a direct interface with the inter-RAT network element; or transmit the interference control request message to the inter-RAT network element via an operation administration and maintenance OAM that has a connection relationship with both a communication system in which the apparatus for interference control locates and a communication system in which the inter-RAT network element locates; or transmit the interference control request message to the inter-RAT network element via a core network node that has a connection relation with both the apparatus for interference control and the inter-RAT network element, where, the interference control request message is carried by a radio access network information management RIM message.

In an eleventh aspect, an apparatus for interference control is provided, including:
a processor, configured to determine an interfered network element in inter-RAT communication systems; and determine an interfering network element that locates in an inter-RAT communication system from the interfered network element and produces interference to the interfered network element; and
a transceiver, configured to transmit an interference control request message to the interfering network element determined by the processor, where, the interference control request message is used for requesting to perform interference control to a designated sub-band occupied by the interfering network element.

With reference to the eleventh aspect, in a first possible implementation, the transceiver is further configured to, when the interfering network element cannot be determined by the processor, transmit an interference control message to a network element in an inter-RAT communication system that has at least one of the following relationships with the interfered network element: a network element in an inter-RAT communication system that has a neighborhood relationship with the interfered network element; a network element in an inter-RAT communication system that has a connection relationship with the interfered network element, where, the interference control request message is used for requesting to perform interference control to a designated sub-band occupied by a network element receiving the interference request message.

With reference to the eleventh aspect, in a second possible implementation, the transceiver is further configured to receive an interference control response message replied by a network element capable of adjusting transmitted power of the occupied designated sub-band in the interfering network element for the interference control request message transmitted by the transmitter.

With reference to the first possible implementation of the eleventh aspect, in a third possible implementation, the transceiver is further configured to, after transmitting the interference control request message to the interfering network element, receive an interference control response message replied by the network element receiving the interference request message. With reference to the eleventh aspect, or with reference to the first possible implementation of the eleventh aspect, or with reference to the second possible implementation of the eleventh aspect, or with reference to the third possible implementation of the eleventh aspect, in a fourth possible implementation, the transceiver is further configured to, before the processor determines the interfered network element, transmit an interference measurement request message to a network element in an inter-RAT communication system governed by a device in which the apparatus locates; receive an interference measurement response message transmitted by the governed network element for the interference measurement request message, where, the interference measurement request message is used for requesting a power parameter of the designated sub-band occupied by the network element governed, where, the power parameter includes at least one of a received power and a received interference power, and the interference measurement response message is used by the governed network element to report the power parameter of the designated sub-band occupied by the governed network element as measured; and the processor is specifically configured to determine a network element which is in compliance with a preset interference determining condition and in the governed network elements as the interfered network element according to the power parameter of the designated sub-band occupied by the governed network element measured by the governed network element as received by the transceiver.

With reference to the fourth possible implementation of the eleventh aspect, in a fifth possible implementation, an information element IE in the interference measurement request message transmitted by the transceiver includes one or more of the following cells: a message type, a bandwidth range of the designated sub-band occupied by a requested network element requested to be reported, and a counting unit used by the requested network element when reporting the power parameter of the occupied designated sub-band; an information element IE in the interference measurement response message received by the transceiver includes: a message type and a power parameter of an occupied designated sub-band measured by the requested network element, where, the occupied designated sub-band measured by the requested network element is the designated sub-band requested in the interference measurement request message.

With reference to the fifth possible implementation of the eleventh aspect, in a sixth possible implementation, the information element IE in the interference measurement response message received by the transceiver further includes: a segment granularity of the occupied designated sub-band measured by the requested network element.

With reference to the eleventh aspect, or with reference to the first possible implementation of the eleventh aspect, or with reference to the second possible implementation of the eleventh aspect, or with reference to the third possible implementation of the eleventh aspect, in a seventh possible implementation, the transceiver is further configured to, before the processor determines the interfered network element, transmit an interference measurement request message to a network element in a communication system governed by a device in which the apparatus locates; receive an interference measurement report message transmitted by the governed network element for the interference measurement request message according to a preset receiving rule, where, the interference measurement request message is used for requesting the governed network element to report a power parameter of the occupied designated sub-band via the interference measurement report message, where, the power parameter includes at least one of a received power and a received interference power; and the processor is specifically configured to determine a network element that is in compliance with a preset interference determining condition and is in the governed network element as the interfered network element according to the power parameter of the designated sub-band occupied by the governed network element which is measured by the governed network element and is carried in the interference measurement report message received by the transceiver.

With reference to the seventh possible implementation of the eleventh aspect, in an eighth possible implementation, an information element IE in the interference measurement request message transmitted by the transceiver includes one or more of the following cells: a message type, a bandwidth range of a designated sub-band occupied by a requested network element requested to be reported, and a counting unit used by the requested network element when reporting the power parameter of the occupied designated sub-band; an information element IE in the interference measurement report message received by the transceiver includes: a message type and a power parameter of an occupied designated sub-band measured by the requested network element, where, the occupied designated sub-band measured by the requested network element is the designated sub-band requested in the interference measurement request message. With reference to the eighth possible implementation of the eleventh aspect, in a ninth possible implementation, the information element IE in the interference measurement report message received by the transceiver further includes: a segment granularity of the occupied designated sub-band measured by the requested network element.

With reference to the eleventh aspect, or with reference to the first possible implementation of the eleventh aspect, or with reference to the second possible implementation of the eleventh aspect, or with reference to the third possible implementation of the eleventh aspect, in a tenth possible implementation, the transceiver is further configured to receive an interference control request message transmitted by any network element in a communication system governed by a device in which the apparatus locates, where, the interference control request message is used for requesting to perform interference control to an interfered sub-band occupied by the any network element; and the processor is specifically configured to determine the any network element as the interfered network element.

With reference to the eleventh aspect, or with reference to the first possible implementation of the eleventh aspect, in an eleventh possible implementation, an information element IE in the interference control request message transmitted by the transceiver includes one or more of the following cells: a message type, a bandwidth range of a designated sub-band occupied by a requested network element requested to be controlled, an amount of interference on the interfered sub-band, an amount of interference or an interference level that needs to be controlled by the requested network element on the occupied designated sub-band, and a counting unit used by the requested network element when reporting the amount of interference of an occupied designated sub-band as controlled.

With reference to the eleventh possible implementation of the eleventh aspect, in a twelfth possible implementation, the amount of interference on the interfered sub-band in the interference control request message is specifically one of a total interference power value on the interfered sub-band, a total received power value on the interfered sub-band, a quantization level of a total interference intensity on the interfered sub-band, and a quantization level of a total receiving intensity on the interfered sub-band.

With reference to the eleventh possible implementation of the eleventh aspect, or with reference to the twelfth possible implementation of the eleventh aspect, in a thirteenth possible implementation, the amount of interference that needs to be controlled by the requested network element on the occupied designated sub-band in the interference control request message is specifically: a preset threshold value of maximum transmitted power of the requested network element on the occupied designated sub-band; or reduced amount of transmitted power that needs to be reduced by the requested network element on the occupied designated sub-band; or a transmitted power value after a reduction that needs to be performed by the requested network element on the occupied designated sub-band.

With reference to the second possible implementation of the eleventh aspect, or with reference to the third possible implementation of the eleventh aspect, in a fourteenth possible implementation, an information element IE in the interference control response message received by the transceiver includes one or more of the following cells: a message type, an adjustment amount performed by a requested network element to transmitted power of the occupied designated sub-band, whether the requested network element performs an adjustment to the transmitted power of the interfered sub-band, and a range of the interfered sub-band adjusted by the requested network element.

With reference to the fourteenth possible implementation of the eleventh aspect, in a fifteenth possible implementation, the adjustment amount performed by the requested network element to the transmitted power of the interfered sub-band is specifically: an amount adjusted by the requested network element to the transmitted power of the interfered sub-band; or an amount after the adjustment is performed by the requested network element to the transmitted power of the interfered sub-band.

In a twelfth aspect, an apparatus for interference control is provided, including:
a transceiver, configured to receive an interference control request message transmitted by a first network element, where the interference control request message is used for requesting to perform interference control to a designated sub-band occupied by a device in which the apparatus locates;
a processor, configured to perform at least one of the following operations: adjust, within a preset range, transmitted power of the occupied designated sub-band that has been allocated by the second network element; allocate, within a preset range, the transmitted power of the designated sub-band occupied by the second network element, where,
the first network element and the device in which the apparatus locates are network elements in inter-RAT communication systems respectively, or, the first network element is a single radio access network controller SRC that is configured to allocate resources occupied by network elements in each inter-RAT communication system, and the device in which the apparatus locates is a network element in any communication system.

With reference to the twelfth aspect, in a first possible implementation, the transceiver is further configured to transmit an interference control response message to the first network element for the interference control request message received by the receiver.

With reference to the twelfth aspect, or with reference to the first possible implementation of the twelfth aspect, in a second possible implementation, the transceiver is further configured to, before receiving the interference control request message transmitted by the first network element, receive an interference measurement request message transmitted by the first network element; and transmit an interference measurement response message to the first network element for the interference measurement request message, where, the interference measurement request message is used for requesting a power parameter of the designated sub-band occupied by the device in which the apparatus locates, the power parameter includes at least one of a received power and a received interference power, the interference measurement response message is used for reporting the power parameter of the designated sub-band occupied by the device as measured by the device in which the apparatus locates, and the first network element is the SRC.

With reference to the second possible implementation of the twelfth aspect, in a third possible implementation, the processor is further configured to measure the power parameter of the designated sub-band occupied by the device requested in the interference measurement request received by the transceiver; the transceiver is specifically configured to, when the processor is able to measure the power parameter of the designated sub-band occupied by the device in which the apparatus locates as requested in the interference measurement request, transmit an interference measurement response message to the first network element, where, the interference measurement response message is used for reporting the power parameter of the designated sub-band occupied by the device as requested in the interference measurement request; or when the processor is not able to measure the power parameter of the designated sub-band occupied by the device as requested in the interference measurement request, take a sub-band which is determined according to the power parameter of the requested designated sub-band and frequency spectrum sharing information of the device as the designated sub-band occupied by the device; transmit an interference measurement response message to the first network element, where, the interference measurement response message carries a power parameter of the determined designated sub-band occupied by the device.

With reference to the second possible implementation of the twelfth aspect, or with reference to the third possible implementation of the twelfth aspect, in a fourth possible implementation, an information element IE in the interference measurement request message received by the transceiver includes one or more of the following cells: a message type, a bandwidth range of a designated sub-band occupied by a requested network element requested to be reported, and a counting unit used by the requested network element when reporting the power parameter of the occupied designated sub-band; an information element IE in the interference measurement response message transmitted by the transceiver includes: a message type and a power parameter of the occupied designated sub-band measured by the requested network element.

With reference to the fourth possible implementation of the twelfth aspect, in a fifth possible implementation, the information element IE in the interference measurement response message transmitted by the transceiver further includes: a segment granularity of the occupied designated sub-band measured by the requested network element.

With reference to the twelfth aspect, in a sixth possible implementation, the transceiver is further configured to, before receiving the interference control request message transmitted by the first network element, receive an interference measurement request message transmitted by the first network element; and transmit an interference measurement report message to the first network element for the received interference measurement request message according to a preset transmitting rule, where, the interference measurement request message is used for requesting to report a power parameter of the designated sub-band occupied by the device in which the apparatus locates via an interference measurement report message, where, the power parameter includes at least one of a received power and a received interference power, and the first network element is the SRC.

With reference to the sixth possible implementation of the twelfth aspect, in a seventh possible implementation, the processor is further configured to measure the power parameter of the designated sub-band occupied by the device requested in the interference measurement request received by the transceiver; the transceiver is specifically configured to, when the processor is able to measure the power parameter of the designated sub-band occupied by the device in which the apparatus locates as requested in the interference measurement request, transmit an interference measurement report message to the first network element, where, the interference measurement report message is used for reporting the power parameter of the designated sub-band occupied by the device as requested in the interference measurement request; or when the processor is not able to measure the power parameter of the designated sub-band occupied by the device as requested in the interference measurement request, take a sub-band which is determined according to the power parameter of the requested designated sub-band and frequency spectrum sharing information of the device as the designated sub-band occupied by the device; transmit an interference measurement report message to the first network element, where, the interference measurement report message carries a power parameter of the determined designated sub-band occupied by the device.

With reference to the sixth possible implementation of the twelfth aspect, or with reference to the seventh possible implementation of the twelfth aspect, in an eighth possible implementation, an information element IE in the interference measurement request message received by the transceiver includes one or more of the following cells: a message type, a bandwidth range of a designated sub-band occupied by a requested network element requested to be reported, and a counting unit used by the requested network element when reporting the power parameter of the occupied designated sub-band; an information element IE in the interference measurement report message transmitted by the transceiver includes: a message type and a power parameter of the occupied designated sub-band measured by the requested network element.

With reference to the eighth possible implementation of the twelfth aspect, in a ninth possible implementation, the information element IE in the interference measurement report message transmitted by the transceiver further includes: a segment granularity of the occupied designated sub-band measured by the requested network element.

With reference to the twelfth aspect, in a tenth possible implementation, the transceiver is further configured to, when there is an interfered sub-band in a bandwidth occupied by the device in which the apparatus locates, transmit an interference control request message to the first network element, where, the interference control request message is used for requesting to perform interference control to the interfered sub-band occupied by the device, and the first network element is the SRC.

With reference to the twelfth aspect, in an eleventh possible implementation, an information element IE in the interference control request message received by the transceiver includes one or more of the following cells: a message type, a bandwidth range of the designated sub-band occupied by a requested network element requested to be controlled, an amount of interference on the interfered sub-band, an amount of interference or an interference level that needs to be controlled by the requested network element on the occupied designated sub-band, and a counting unit used by the requested network element when reporting the amount of interference of an occupied designated sub-band as adjusted.

With reference to the first possible implementation of the twelfth aspect, in a twelfth possible implementation, an information element IE in the interference control response message transmitted by the transceiver includes one or more of the following cells: a message type, a bandwidth range of the occupied designated sub-band adjusted by the requested network element, adjustment amount performed to transmitted power of the occupied designated sub-band, and whether the requested network element performs an adjustment to the transmitted power of the interfered sub-band.

With reference to the twelfth aspect, or with reference to the first possible implementation of the twelfth aspect, in a thirteenth possible implementation, the processor is specifically configured to: use one or more of the following manners to adjust, within the preset range, the transmitted power of an occupied designated sub-band that has been allocated by the device in which the apparatus locates: for a terminal which locates between a cell governed by the device in which the apparatus locates and a cell governed by an interfered network element, locates at an edge of the cell governed by the device in which the apparatus locates, and occupies the designated sub-band, reduce transmitted power of the terminal so that the transmitted power of the terminal is less than a preset maximum transmitted power threshold value or the transmitted power of the terminal is reduced by a preset value; for a terminal within a cell governed by the device in which the apparatus locates, adjust transmitted power of a terminal so that transmitted power of the terminal is less than a preset maximum transmitted power threshold value; for terminals which locate between a cell governed by the device in which the apparatus locates and a cell governed by an interfered network element, locate at an edge of the cell governed by the device in which the apparatus locates, and occupy the designated sub-band, reduce an amount of the terminals scheduled at a same time; when the device in which the apparatus locates is a network element in an LTE RAT communication system, for a terminal which locates between a cell governed by the device in which the apparatus locates and a cell governed by an interfered network element, locates at the cell governed by the device in which the apparatus locates, and occupies the designated sub-band, perform at least one of the following operations when performing data transmission with the terminal: reduce transmitted power of each resource block carrying data, and increase amount of resource blocks used for carrying data;

Use one or more of the following manners to allocate, within the preset range, transmitted power of the designated sub-band occupied by the device in which the apparatus locates: for a terminal in a cell governed by the device in which the apparatus locates, when it needs to allocate a designated sub-band for the terminal, control transmitted power of the terminal on the designated sub-band to be no more than a preset maximum transmitted power threshold value; for terminals in a cell governed by the device in which the apparatus locates, allocate a designated sub-band for a terminal satisfying at least one of the following conditions for use: a cell center terminal of which transmitted power is less than a preset power threshold value, a terminal having a distance which is no less than a preset distance threshold value from an interfered network element, and a terminal having a path loss difference, between a path loss to the interfered network element and a path loss to a cell in which the terminal locates, which is greater than a preset threshold, where, the preset distance threshold value or the preset threshold is used for ensuring that there is no interference to the interfered network element when a signal transmitted from the terminal is transmitted to the interfered network element; when the interference control request message also carries time range information of a period of time that a requested network element needs to perform interference control to an occupied designated sub-band occupied, for a terminal which locates in a cell governed by the device in which the apparatus locates, allocate the designated sub-band for a terminal of which transmitted power is less than a preset power threshold value for use in the period of time that the interference control is needed.

In a thirteenth aspect, a network element is provided, including: the apparatus for interference control according to the tenth aspect or with reference to any possible implementation of the tenth aspect.

In a fourteenth aspect, an SRC is provided, including: the apparatus for interference control according to the eleventh aspect or with reference to any possible implementation of the eleventh aspect.

In a fifteenth aspect, a network element is provided, including: the apparatus for interference control according to the twelfth aspect or with reference to any possible implementation of the twelfth aspect.

Beneficial effects in embodiments of the present invention include:
Embodiments of the present invention provide a method and an apparatus for interference control, and a network element device, when a first network element and a second network element are network elements in inter-RAT communication systems, the first network element determines an interfered sub-band from a bandwidth occupied by the first network element; and transmits an interference control request message which is used for requesting the second network element to perform interference control to the interfered sub-band to the second network element; after receiving the interference control request message, the second network element performs at least one of the following operations: adjusting, within a preset range, transmitted power of the occupied designated sub-band that has been allocated by the second network element; allocating, within a preset range, the transmitted power of the designated sub-band occupied by the second network element.

When the first network element is a single radio access network controller (SRC, Single RAN (Radio Access Network) controller) and the second network element may be a network element in any communication system, the first network element transmits an interference control request message which is used for requesting to perform interference control to a designated sub-band occupied by the second network element to the second network element. After receiving the interference control request message transmitted by the first network element, the second network element performs at least one of the following operations: adjusting, within a preset range, transmitted power of the occupied designated sub-band that has been allocated by the second network element; allocating, within a preset range, the transmitted power of the designated sub-band occupied by the second network element. By using the methods for interference control provided in the present invention, when the first network element and the second network element are network elements in inter-RAT communication systems, interference control between the inter-RAT communication systems is implemented via an interaction of an interference control request message and an interference control response message between the inter-RAT network elements, when the first network element is an SRC and the second network element is a network element in any communication system, interference control between the inter-RAT communication systems is implemented via an interaction of an interference control request message and an interference control response message between the SRC and an inter-RAT network element, thereby solving a problem that there is too much interference between adjacent cells of different RATs.

### BRIEF DESCRIPTION OF DRAWINGS

FIG. 1 is a flow chart of a method for interference control, which is applied at a first network element side requesting for interference control, according to an embodiment of the present invention;
FIG. 2 is a first schematic diagram of a network architecture according to an embodiment of the present invention;
FIG. 3 is a flow chart of a method for interference control, which is applied at a first network element RSC side requesting for interference control, according to an embodiment of the present invention;
FIG. 4 is a second schematic diagram of a network architecture according to an embodiment of the present invention;
FIG. 5 is a flow chart of a method for interference control, which is applied at a second network element side requested for interference control, according to an embodiment of the present invention;
FIG. 6 is a flow chart of a method for interference control according to an embodiment of the present invention;
FIG. 7 is a flow chart of a method for interference control according to another embodiment of the present invention;
FIG. 8a-FIG. 8b are schematic diagrams of an interaction between an interference control request message and an interference control response message according to an embodiment of the present invention;
FIG. 9a-FIG. 9b are schematic diagrams of an interacting scenario of a first network element and a second network element according to an embodiment of the present invention;
FIG. 10 is a flow chart of a method for interference control according to another embodiment of the present invention;
FIG. 11a-FIG. 11b are schematic diagrams of an interaction among an interference measurement request message, an interference measurement response message and an interference measurement report message according to an embodiment of the present invention;
FIG. 12 is a flow chart of a method for interference control according to another embodiment of the present invention;
FIG. 13a-FIG. 13d are schematic diagrams of an interaction between a first network element and a governed network element according to an embodiment of the present invention;
FIG. 14 is a flow chart of a method for interference control according to another embodiment of the present invention;
FIG. 15a-FIG. 15c are schematic diagrams of an interaction between a first network element and a governed network element according to an embodiment of the present invention;
FIG. 16 is a schematic structural diagram of a first apparatus for interference control according to an embodiment of the present invention;
FIG. 17 is a schematic structural diagram of a second apparatus for interference control according to an embodiment of the present invention;
FIG. 18 is a schematic structural diagram of a third apparatus for interference control according to an embodiment of the present invention;
FIG. 19 is a schematic structural diagram of a fourth apparatus for interference control according to an embodiment of the present invention;
FIG. 20 is a schematic structural diagram of a fifth apparatus for interference control according to an embodiment of the present invention;
FIG. 21 is a schematic structural diagram of a sixth apparatus for interference control according to an embodiment of the present invention.

### DESCRIPTION OF EMBODIMENTS

Embodiments of the present invention provide a method and an apparatus for interference control, and a network element device, preferred embodiments of the present invention will be described hereunder with reference to accompanying drawings of the description, it should be understood that, the preferred embodiments described herein are merely intended for describing and explaining the present invention rather than limiting the present invention. Only embodiments falling within the scope of the appended claims are part of the invention. In case of no conflict, embodiments in the present application and features in the embodiments may be combined with each other.

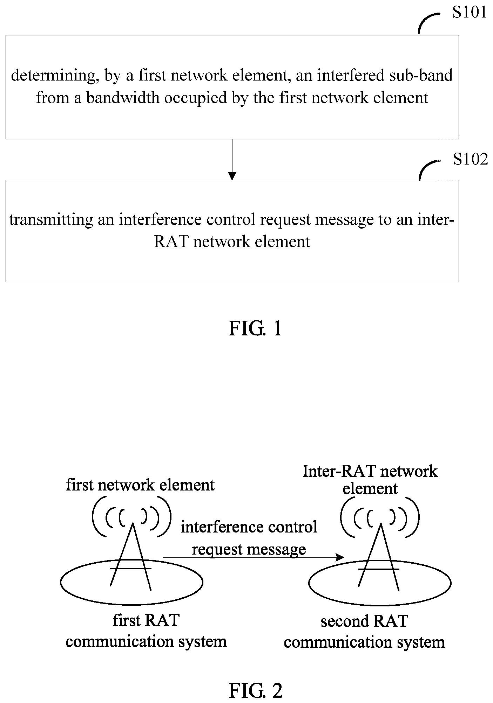

Embodiments of the present invention provide a method for interference control which is applied at a first network element side requesting interference control, as shown in FIG. 1, including: S101, determining, by a first network element, an interfered sub-band from a bandwidth occupied by the first network element.

S102, transmitting an interference control request message to an inter-RAT network element, where, the interference control request message is used for requesting the inter-RAT network element to perform interference control to the interfered sub-band; a communication system in which the inter-RAT network element locates is an inter-RAT communication system from a communication system in which the first network element locates.

In further, FIG. 2 is a schematic diagram of a network architecture according to this embodiment, as shown in FIG. 2, the first network element and the inter-RAT network element in an inter-RAT communication system from a communication system in which the first network element locates, preferably, the first network element and the inter-RAT network element may be access network elements in communication systems in which the network elements locate respectively, for instance, a base station (a NodeB or an eNodeB), a radio network controller (RNC, Radio Network Controller), a base station controller (BSC, Base Station Controller), etc. That is to say, when the first network element is an access network element in a communication system using any RAT, the inter-RAT network element may be an access network element in an inter-RAT communication system from the communication system in which the first network element locates. In further, the inter-RAT network element receiving an interference control request message transmitted by the first network element may be an interfering network element which causes interference to the first network element, may also be an inter-RAT network element having a neighborhood relationship with the first network element, and may also be an inter-RAT network element having a connection relationship with the first network element.

As shown in FIG. 2, the first network element transmits the interference control request message to the inter-RAT network element. Thus, in this embodiment, direct communications may be performed by a network element in the inter-RAT communication system via a communication interface between the first network element and the inter-RAT network element to perform interference control, in this case, when the first network element in a first RAT communication system is interfered by an inter-RAT network element in a second RAT communication system, the first network element may directly communicate with the inter-RAT network element to transmit the interference control request message to the inter-RAT network element, and perform interference control to the inter-RAT network element; or if there is an operation administration and maintenance (OAM, Operation Administration and Maintenance) having a connection relationship with both the communication system in which the first network element locates and the communication system in which the inter-RAT network element locates, then the first network element may transmit the interference control request message to the inter-RAT network element via the OAM; or if there is a core network node having a connection relationship with both the first network element and the inter-RAT network element, then the interference control request message may be transmitted to the inter-RAT network element via the core network node, in further, the interference control request message transmitted to the inter-RAT network element by the first network element may be carried in a radio access network information management (RIM, RAN (Radio Access Network) Information Management) message, thereby reducing interference from an inter-RAT adjacent cell to the first network element.

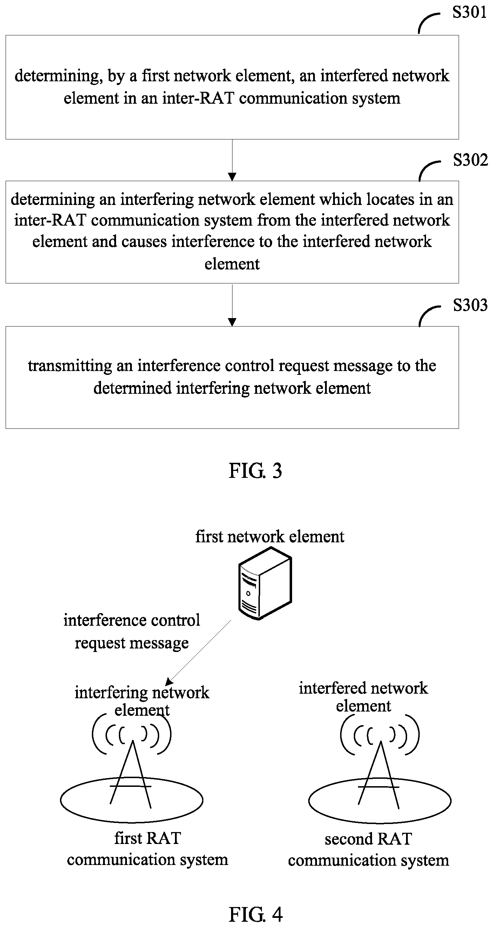

Embodiments of the present invention provide a method for interference control which is applied at a first network element SRC side requesting interference control, as shown in FIG. 3, including:
S301, determining, by a first network element, an interfered network element in an inter-RAT communication system, where, the first network element is an SRC that is configured to allocate a resource occupied by a network element in the inter-RAT communication system.
S302, determining an interfering network element which locates in an inter-RAT communication system from the interfered network element determined in S301 and causes interference to the interfered network element.
S303, transmitting an interference control request message to the interfering network element determined in S302, where, the interference control request message is used for requesting interference control of a designated sub-band occupied by the interfering network element.

In further, FIG. 4 is a schematic diagram of a network architecture provided by this embodiment, as shown in FIG. 4, the first network element is an SRC, the interfering network element and the interfered network element locate in inter-RAT communication systems, where, the SRC may be configured to schedule, allocate, manage and control resources occupied by network elements in each inter-RAT communication system, and perform interference control of the network elements in each inter-RAT communication system, and the SRC may not belong to any communication system. The SRC may perform resource scheduling, allocation and interference control and etc to each inter-RAT base station via a base station controller in the inter-RAT communication systems (for instance, a base station governed by an RNC may be controlled via the RNC in a UMTS RAT), and may also perform resource scheduling, allocation and interference control to base stations in each inter-RAT communication system directly (for instance, an eNodeB may be controlled directly in an LTE RAT). Preferably, the interfering network element and the interfered network element may be access network elements in communication systems in which the network elements locate respectively, for instance, a base station, a radio network controller (RNC, Radio Network Controller), a base station controller (BSC, Base Station Controller) and etc. That is to say, when the first network element is an SRC, the interfered network element and the interfering network element may be a plurality of access network elements in inter-RAT communication systems governed by the SRC.

In further, in this embodiment, the SRC determines the interfered network element, and then determines the interfering network element that locates in the inter-RAT communication system from the interfered network element, as shown in FIG. 4, the SRC transmits an interference control request message to the interfering network element. Thus, in this embodiment, via an SRC configured to allocate, control and manage a resource occupied by a network element in an inter-RAT communication system, interference control may be performed to an inter-RAT network element governed by the SRC, then, when the interfered network element that locates in a second RAT communication system is interfered by the interfering network element that locates in a first mode communication system, an interference control request message may be transmitted to the interfering network element via the SRC to performed reference control of the interfering network element, thereby reducing interference from an inter-RAT interfering network element to the interfered network element.

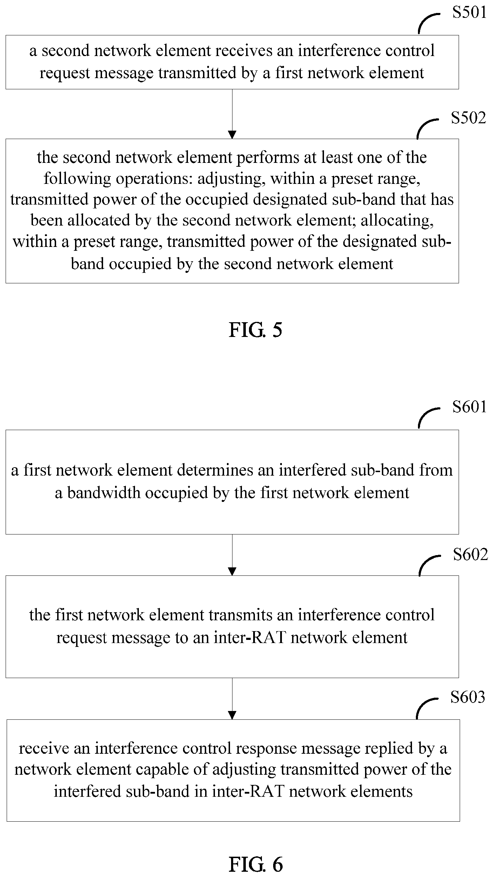

Corresponding to the method as shown in FIG. 1 or FIG. 3, embodiments of the present invention also provide a method for interference control, which is applied at a second network element side to which interference control is request, as shown in FIG. 5, including:
S501, a second network element receives an interference control request message transmitted by a first network element, where the interference control request message is used for requesting to perform interference control to a designated sub-band occupied by the second network element.
S502, the second network element performs at least one of the following operations: adjusting, within a preset range, transmitted power of the occupied designated sub-band that has been allocated by the second network element; allocating, within a preset range, transmitted power of the designated sub-band occupied by the second network element;

The first network element and the second network element are network elements in inter-RAT communication systems respectively, or, the first network element is a single radio access network controller SRC that is configured to allocate a resource occupied by a network element in each inter-RAT communication system, and the second network element is a network element in any communication system.

Preferably, in this embodiment, the first network element and the second network element, which are not a SRC, may be access network elements in communication systems in which they locate respectively, for instance, a base station, a radio network controller (RNC, Radio Network Controller), a base station controller (BSC, Base Station Controller), etc. That is to say, when a first network element is an access network element in a communication system using any RAT (the first network element as shown in FIG. 2), a second network element is an access network element in an inter-RAT communication system from a communication system in which the first network element locates (the inter-RAT network element as shown in FIG. 2), when the first network element is an SRC, the second network element is an access network element in a communication system of any RAT (the interfering network element as shown in FIG. 4), or is a plurality of access network elements in an inter-RAT communication system.

With reference to the drawings, methods and related devices provided in the present invention will be described hereunder in detail by using specific embodiments.

Embodiments of the present invention provide a method for interference control, in this embodiment, a first network element and an inter-RAT network element are network elements in inter-RAT communication systems, and this embodiment is applied in the first network element, as shown in FIG. 6, specifically including the following steps:
S601, determining, by a first network element, an interfered sub-band from a bandwidth occupied by the first network element.

In this step, whether interference control needs to be performed is determined by the first network element. For instance, before the first network element needs to convert a RAT, the first network element needs to determine whether there is a sub-band which is shared with other network elements in a bandwidth occupied currently and to which interference is so high that the first network element cannot complete the RAT conversion. The first network element may determine whether each sub-band in the bandwidth occupied by the first network element is an interfered sub-band according to whether received power (RP, Received Power) of the sub-band is greater than a preset RP threshold value. When it is determined that the sub-band is the interfered sub-band, if the first network element is a base station, it may be conceived that transmitted power of a base station at an inter-RAT adjacent cell of the first network element on the sub-band is much too high, an interference control request needs to be transmitted to the adjacent cell or a network element (for instance, an RNC, a BSC, etc.) governing the adjacent cell to request the base station at the adjacent cell to reduce the transmitted power on the interfered sub-band; if the first network element is a network element governing a base station, it may be conceived that transmitted power of a base station at an inter-RAT adjacent cell of the base station governed by the first network element on the sub-band is much too high, an interference control request needs to be transmitted to the adjacent cell or the network element (for instance, an RNC, a BSC, etc.) governing the adjacent cell to request the adjacent cell to reduce the transmitted power on the interfered sub-band.

In further, the first network element may determine the interfered sub-band by using a preset algorithm, for instance, may determine a sub-band of which received power RP is greater than a preset RP threshold value as the interfered sub-band, or determine the interfered sub-band through calculations based on a preset algorithm.

In further, if it is determined in this step that the whole bandwidth occupied by the first network element are interfered, then the interfered whole band may also be determined, and interference control is requested to be performed to the interfered whole band in subsequent steps.

S602, the first network element transmits an interference control request message to an inter-RAT network element, where, the interference control request message is configured to request the inter-RAT network element to perform interference control to the interfered sub-band determined in S601; a communication system in which the inter-RAT network element locates is an inter-RAT communication system from a communication system in which the first network element locates.

In this step, the first network element may not need to accurately determine a network element that causes interference to an interfered sub-band of the first network element, instead, transmit an interference control request message to an inter-RAT network element that has at least one of the following relationships with the first network element through broadcasting: an inter-RAT network element having a neighborhood relationship with the first network element, and an inter-RAT network element having a connection relationship with the first network element, after receiving the interference control request message, the inter-RAT network element may determine whether the interfered sub-band requested by the first network element is included in the bandwidth occupied by the inter-RAT network element itself, if not included, a response may not be made, if included, then may further determine whether the inter-RAT network element itself is capable of processing the interference request message, if incapable of processing, a response may also not be made.

In further, an information element (IE, Information Element) in the interference control request message may include one or more of the following cells: a message type (that is, the interference control request message), a bandwidth range of the interfered sub-band requested to be controlled (for instance, from a megahertz (MHz) to b megahertz), an amount of interference on the interfered sub-band (that is, size of interference suffered by the interfered sub-band), an amount of interference or an interference level that needs to be controlled by a requested network element on the interfered sub-band, and a counting unit (for instance, a decibel (db, Decibel) value or a linear value) used by the requested network element when reporting a controlled amount of interference;

The amount of interference on an interfered sub-band may be one of: a total interference power value on the interfered sub-band, a total received power value on the interfered sub-band, a quantization level of a total interference intensity on the interfered sub-band, and a quantization level of a total received intensity on the interfered sub-band. That is to say, the total interference power value on the interfered sub-band may be an interference power value of interference suffered by the interfered sub-band, the total received power on the interfered sub-band may include normal signal power and interference signal power received on the interfered sub-band, in further, the interference intensity may be prequantized into different levels, for instance, a high grade indicates a strong interfered intensity, an intermediate grade indicates an intermediate interfered intensity, and a low grade indicates a low interfered intensity, then, a quantization level of the total interference intensity on the interfered sub-band may be a level of the interference intensity of interference suffered by the interfered sub-band, similarly, the received power intensity may be prequantized into different levels, a quantization level of the total received intensity on the interfered sub-band may be a quantization level of the total received intensity of total power received on the interfered sub-band.

The amount of interference that needs to be controlled by the requested network element on the interfered sub-band may be a preset threshold value of maximum transmitted power of the requested network element on the occupied designated sub-band; or a reduced amount of transmitted power that needs to be reduced by the requested network element on the occupied designated sub-band; or a transmitted power value after the reduction that needs to be performed by the requested network element on the occupied designated sub-band, that is also power that needs to be controlled by the requested network element on the interfered sub-band, in further, the amount of interference that needs to be controlled by the requested network element on the interfered sub-band may be an absolute amount of interference that needs to be controlled (for instance, an amount of power to which the requested network element needs to control the power on the interfered sub-band), and may also be a relative amount of interference in relative to the current amount of interference (for instance, an amount of power that needs to be reduced by the requested network element on the interfered sub-band), an interference level that needs to be controlled by the requested network element on the interfered sub-band may be predefined, indicating a level of interference (for instance, high interference, low interference, etc.) from the inter-RAT network element to the interfered sub-band. When the bandwidth range of the interfered sub-band requested to be controlled indicates a sub-band, then interference control is requested for the sub-band, when the bandwidth range of the interfered sub-band requested to be controlled indicates a whole band, then interference control is requested for the whole band.

In further, according to the method for interference control provided by embodiments of the present invention, firstly, interference control between inter-RAT network elements may be implemented via direct communications between an interfered network element and an interfering network element, in further, in addition to the realization of interference control between inter-RAT network elements, when requesting interference control, not only an interfered whole band may be directed at, but also an interfered sub-band may be determined and then the interference control is performed for the interfered sub-band, so that an object of the interference control can be more accurate.

S603, receiving an interference control response message replied by a network element capable of adjusting transmitted power of the interfered sub-band in inter-RAT network elements.

In this step, if a bandwidth occupied by an inter-RAT network element receiving the interference control request message includes an interfered sub-band requested by the first network element, and when current transmitted power of the interfered sub-band can be reduced on the premise of ensuring a normal operation, the inter-RAT network element receiving the interference control request message may reduce the transmitted power on the interfered sub-band by reducing transmitted power of the inter-RAT network element itself or a UE covered by the inter-RAT network element itself, and reply an interference control response message to the first network element after reducing the transmitted power; whereas when current transmitted power of the interfered sub-band cannot be reduced on the premise of ensuring a normal operation, the transmitted power may not be reduced, and an interference control response message may not be replied to the first network element. That is to say, an interference control process may be a one-way best-effort behavior, the first network element may require the inter-RAT network element to perform interference control, but the inter-RAT network element does its best to perform the interference control based on its own behavior, and may not reply with the interference control response message, or reply with the interference control response message indicating interference control failure.

In further, an information element IE in the interference control response message may include one or more of the following cells: a message type (that is, the interference control response message), an adjustment amount performed by a requested network element to transmitted power of the occupied interfered sub-band (that is, an adjustment amount reported according to the counting unit used by the requested network element when reporting the controlled amount of interference as provided in the interference control request message received), an adjustment result (whether the requested network element performs an adjustment to the transmitted power of the interfered sub-band), and a range of the adjusted interfered sub-band. The adjustment amount performed by the requested network element to the transmitted power of the occupied interfered sub-band may correspond to a request of the interference control request message, that is, may be an absolute amount of interference that needs to be controlled by the requested network element on the interfered sub-band (for instance, an amount after the requested network element performs an adjustment to the transmitted power of the occupied interfered sub-band, that is, an amount of power to which the requested network element adjust the power on the interfered sub-band), and may also be a relative amount of interference in relative to the amount of current interference (for instance, an adjustment amount performed by the requested network element to the transmitted power of the occupied interfered sub-band, that is, an amount of power reduced by the requested network element on the interfered sub-band), if the IE of the interference control response message does not include the range of the adjusted interfered sub-band, then it defaults to that the range of the adjusted interfered sub-band is consistent with the range of the interfered sub-band requested in the interference control request.

In further, if the network element capable of adjusting the transmitted power of the interfered sub-band does not reply the interference control response message to the first network element, then do not proceed with this step.

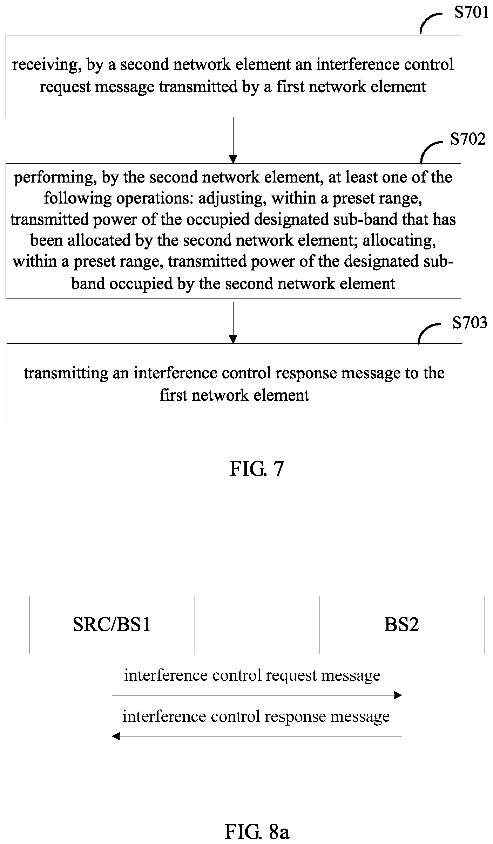

Embodiments of the present invention provide another method for interference control. Corresponding to last embodiment, this embodiment is applied in an inter-RAT network element in the embodiment above, as shown in FIG. 7, specifically including the following steps:
S701, receiving, by a second network element an interference control request message transmitted by a first network element, where the interference control request message is used for requesting to perform interference control to an interfered sub-band occupied by the second network element.

In this step, the interference control request message may also request to perform interference control to an interfered whole band occupied by the second network element.

S702, performing, by the second network element, at least one of the following operations: adjusting, within a preset range, transmitted power of the occupied designated sub-band that has been allocated by the second network element; allocating, within a preset range, transmitted power of the designated sub-band occupied by the second network element.

In this step, for the interfered sub-band that has been allocated in the transmitted power of the interfered sub-band occupied by the second network element, transmitted power of the occupied designated sub-band that has been allocated by the second network element may be adjusted within a preset range, for instance, when the transmitted power of the interfered sub-band occupied by the second network element can be reduced on the premise of ensuring a normal operation, adjust the transmitted power of the interfered sub-band occupied by the second network element, when the transmitted power of the interfered sub-band occupied by the second network element cannot be reduced on the premise of ensuring a normal operation, the second network element may not transmit an interference control response message to the first network element, and may transmit an interference control response message indicating adjustment failure to the first network element; for the interfered sub-band that has not been allocated and is about to be allocated in the transmitted power of the interfered sub-band occupied by the second network element, transmitted power of the interfered sub-band to be newly allocated may be restricted, allocate transmitted power of the designated sub-band occupied by the second network element within the preset range.

S703, transmitting an interference control response message to the first network element. (Reference may be made to subsequent embodiments for specific implementations.)

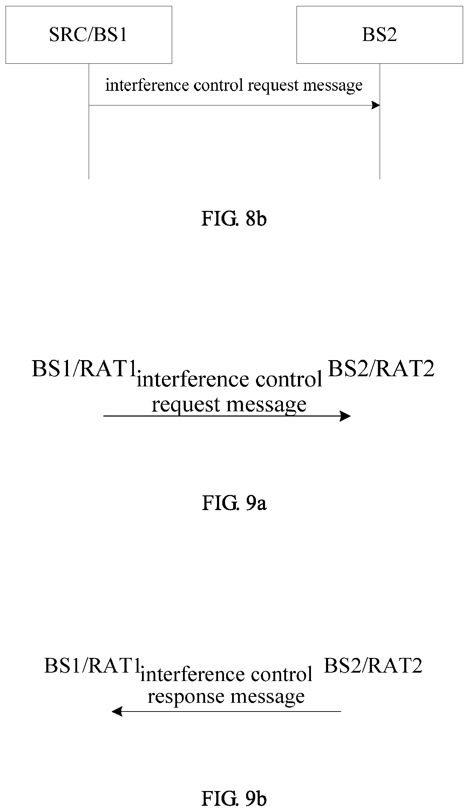

In further, the interference control request (Interference Control Request) message and the interference control response (Interference Control Response) message are new interfaces provided in embodiments of the present invention, which are used for performing interference control between network elements communication systems with different RATs. FIG. 8a - FIG. 8b are schematic diagrams of an interaction between an interference control request message and an interference control response message, as shown in FIG. 8a, an SRC or a base station 1 (BS, Base Station) transmits an interference control request message to a BS2, the BS2 is able to adjust transmitted power of a sub-band indicated in the interference control request, and transmits an interference control response message to the SRC or the BS1 after the adjustment; as shown in FIG. 8b, the SRC or the BS1 transmits the interference control request message to the BS2, the BS2 is not able to adjust transmitted power of the sub-band indicated in the interference control request, and thus does not transmit the interference control response message to the SRC or the BS1.

In further, in this step, when the transmitted power of the interfered sub-band is in compliance with a preset adjusting condition, after adjusting the transmitted power of the interfered sub-band occupied by the second network element, the second network element may not transmit the interference control response message to the first network element either.

Corresponding to both embodiments described above, FIG. 9a-FIG. 9b are schematic diagrams of an interacting scenario of a first network element and a second network element, and the first network element and the second network element may be network elements in inter-RAT communication systems. As shown in FIG. 9a, the first network element (a base station BS1 or a network element device radio access technology 1 (RAT, Radio Access Technology) governing a base station) transmits an interference control request message to a second network element (a base station BS2 or a network element device RAT2 governing a base station), as shown in FIG. 9b, the second network element replies with an interference control response message to the first network element.

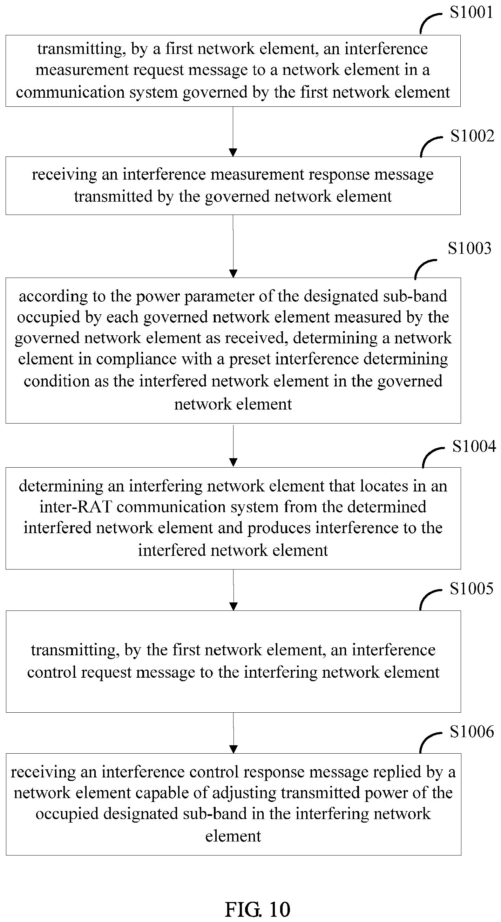

Embodiments of the present invention provide still another method for interference control, in this embodiment, the first network element is an SRC, the SRC determines an interfered network element by making statistic on received power of network elements in each inter-RAT communication system governed by the SRC on a corresponding designated sub-band, and performs interference control to an interfering network element in further, this embodiment is applied in the first network element, as shown in FIG. 10, specifically including the following steps:
S1001, transmitting, by a first network element, an interference measurement request message to a network element in a communication system governed by the first network element.

The interference measurement request message is sued for requesting a power parameter of a designated sub-band occupied by the governed network element, where, the power parameter may include at least one of a received power RP and an interference received power.

In this step, the first network element is an SRC, the SRC is a device configured to allocate resources occupied by network elements in each inter-RAT communication system, then, the SRC may determine an interfered network element that needs to perform interference control by making statistic on power parameters of inter-RAT network elements of which covered cells are adjacent cells on a corresponding designated sub-band, and perform interference control to the determined inter-RAT interfered network element in further. That is to say, when the SRC needs to make statistic on RP of inter-RAT network elements on a designated sub-band, then the interference measurement request message is used for requesting RP of the designated sub-band occupied by the governed network elements when the SRC needs to make statistic on interference received power of inter-RAT network elements on a designated sub-band, then the interference measurement request message is used for requesting interference received power of the designated sub-band occupied by the governed network elements, when the SRC needs to make statistic on both RP and interference received power of inter-RAT network elements on a designated sub-band, then the interference measurement request message is used for requesting RP and interference received power of the designated sub-band occupied by the governed network elements (the SRC may determine an interfered network element according to the RP in combination with the interference received power), a network element receiving the interference measurement request message may make a corresponding measurement according to the request of the SRC.

In further, the received power in the power parameter may be total received power, the total received power may include normal signal power and interference signal power, and the interference received power may be received power of an interference signal in the total received power.

In this step, the first network element may transmit an interference measurement request message to at least two inter-RAT network elements, and for each governed network element, the interference measurement request message is used for requesting a power parameter for the governed network element and of the designated sub-band occupied by the governed network element, a designated sub-band for each governed network element may be a shared sub-band between the governed network element and an adjacent inter-RAT network element, that is to say, a designated sub-band requested in the interference measurement request message received by each governed network element may be different.

In further, an information element IE in the interference measurement request message may include one or more of the following cells: a message type (that is, the interference measurement request message), a bandwidth range of a designated sub-band occupied by a requested network element requested to be reported (for instance, from aMHz to bMHz), and a counting unit (for instance, a db value or a linear value) used by a requested network element when reporting the power parameter of the occupied designated sub-band;

When the bandwidth range of the designated sub-band occupied by the requested network element requested to be reported indicates a sub-band, then interference control is requested to be performed to the sub-band, when the bandwidth range of the designated sub-band occupied by the requested network element requested to be reported indicates a whole band, then interference control is requested to be performed to the whole band.

S1002, receiving an interference measurement response message transmitted by the governed network element.

The interference measurement response message is used by the governed network element for reporting the power parameter of the designated sub-band occupied by the governed network element as measured.

In this step, an information element IE in the interference measurement response message may include: a message type (that is, the interference measurement response message) and a power parameter of an occupied designated sub-band measured by the requested network element, where, the occupied designated sub-band measured by the requested network element is a designated sub-band requested in the received interference measurement request message, or, when the requested network element cannot measure the power parameter of the requested designated sub-band, a sub-band which is determined according to the requested designated sub-band and frequency spectrum sharing information of the requested network element is taken as the measured occupied designated sub-band.

That is to say, after receiving the interference measurement request message, the governed network element may not determine the power parameter of the designated sub-band requested in the interference measurement request message, then, the governed network element may determine a designated sub-band that needs to be measured according to the designated sub-band, frequency spectrum sharing information of the governed network element and a current resource-scheduling condition, and take the determined sub-band as the measured occupied designated sub-band, measure the power parameter of the designated sub-band, and transmit to the first network element through an interference measurement response message.

In further, the information elements IEs in the interference measurement response message may also include: a segment granularity of the occupied designated sub-band measured by the requested network element, that is, the smallest unit used by the governed network element when dividing a sub-band.

In further, in step S1001, the interference measurement request message may indicates reporting a power parameter of the designated sub-band occupied by the governed network element via an interference measurement report message, when the interference measurement request message is used for requesting to report a power parameter of the designated sub-band occupied by the governed network element via an interference measurement report message, step S1002 may be implemented as:
S10021, receiving the interference measurement report message transmitted by the governed network element according to a preset receiving rule;

The preset receiving rule may be a preset rule for receiving an interference measurement report message, for instance, periodically receive an interference measurement report message, and stop receiving an interference measurement report message when periodically transmitting the interference measurement report message is closed.

In further, when the interference measurement request message is used for requesting to report a power parameter of a designated sub-band occupied by the governed network element via an interference measurement report message, an interference measurement response message may also be received, but at this time, the interference measurement response message is not used for reporting the power parameter of the designated sub-band occupied by the governed network element.

In further, the IE included in the interference measurement report message may be the same with the IE included in the interference measurement response message, for instance, a message type (that is, the interference measurement report message) and a power parameter of an occupied designated sub-band measured by the requested network element, where, the occupied designated sub-band measured by the requested network element is a designated sub-band requested in the received interference measurement request message, or, when the requested network element cannot measure the power parameter of the requested designated sub-band, a sub-band which is determined according to the requested designated sub-band and frequency spectrum sharing information of the requested network element is taken as the measured occupied designated sub-band.

In further, information elements IEs in the interference measurement report message may also include: a segment granularity of the occupied designated sub-band measured by the requested network element, that is, the smallest unit used by the governed network element when dividing a sub-band.

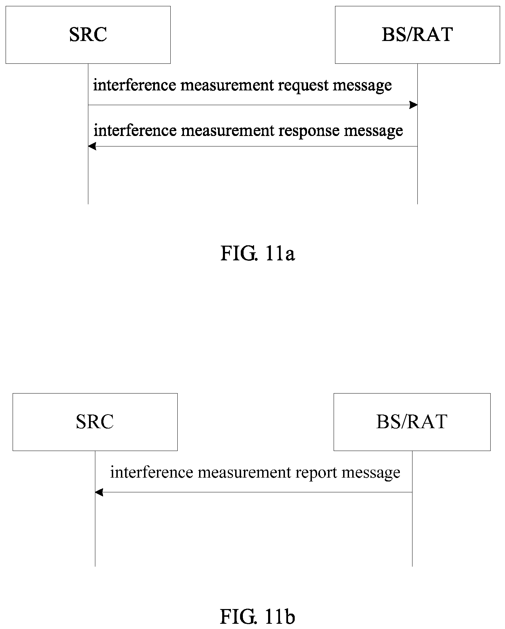

FIG. 11a-FIG. 11b are schematic diagrams of an interaction among an interference measurement request message, an interference measurement response message and an interference measurement report message, as shown in FIG. 11a, an SRC transmits an interference measurement request to a base station (BS) or a base station management network element (RAT), the BS or the RAT transmits an interference measurement response to the SRC, as shown in FIG. 11b, the BS or the RAT may also regularly transmit an interference measurement report message to the SRC according to an indication of the interference measurement request message. In further, the interference measurement request (Interference Measurement Request) message, the interference measurement response (Interference Measurement Response) message and the interference measurement report (Interference Measurement Report) message are new interfaces provided in embodiments of the present invention, which are used by the SRC to measure amount of interference (received power of a designated sub-band) of network elements in communication systems with different RATs, thus an interfered network element is determined according to a measurement result, and interference control is performed to the interfered network element in further.

S1003, according to the power parameter of the designated sub-band occupied by each governed network element measured by the governed network element as received in S1002 (or S1021), determining a network element in compliance with a preset interference determining condition as the interfered network element in the governed network element.

In this step, the first network element may determine a network element of which the power parameter of the occupied designated sub-band is greater than a preset power parameter threshold value as the interfered network element according to the power parameter of the designated sub-band occupied by each governed network element as received.

In further, the preset interference determining condition may be a preset algorithm, a network element obtained through calculations based on the preset algorithm is determined as the interfered network element, for instance, a network element of which the power parameter of the occupied designated sub-band is greater than a preset power parameter threshold value may be determined as the interfered network element.

For step S10021, when the interference measurement report message is received periodically, that is, the power parameter of the occupied designated sub-band reported by the governed network element is received periodically, the interfered network element may be determined according to the power parameter of the designated sub-band of the governed network element received during a time period.

S1004, determining an interfering network element that locates in an inter-RAT communication system from the interfered network element determined in S1003 and produces interference to the interfered network element.

In further, the first network element determines a network element having a RAT different from the interfered network element and producing interference to the interfered network element for each determined interfered network element, and determines the determined network element as the interfering network element, then, the interfering network element may be an inter-RAT network element having a shared sub-band with the interfered network element and a covered cell thereof and a cell covered by the interfered network element are adjacent cells.

In further, steps S1001∼S1004 are steps used by the first network element to determine the interfering network element, where, transmitted power of the designated sub-band occupied by the interfering network element needs to be adjusted or restricted.

S1005, transmitting, by the first network element, an interference control request message to the interfering network element.

The interference control request message is used for requesting to perform interference control to a designated sub-band occupied by the interfering network element.

In this step, according to interfered condition of the interfered network element, when a designated sub-band occupied by the interfering network element produces interference to the interfered network element, the interference control request message may request to perform interference control to the designated sub-band, when a whole band occupied by the interfering network element produces interference to the interfered network element, the interference control request message may also request to perform interference control to the whole band occupied by the interfering network element.

In further, in this step, when the first network element cannot determine the interfering network element via steps S1001∼S1004, this step may be implemented as: transmitting an interference control request message to a network element in an inter-RAT communication system that has at least one of the following relationships with the interfered network element: a network element in an inter-RAT communication system having a neighborhood relationship with the interfered network element; a network element in an inter-RAT communication system having a connection relationship with the interfered network element, where, the interference control request message is used for requesting to perform interference control to a designated sub-band occupied by a network element receiving an interference control request message.

In this step, the first network element performs interference control to a network element (for instance, the interfering network element) receiving the interference control request message by transmitting the interference control request message to the interfering network element, that is to say, a power parameter of the interfered network element interfered by a network element receiving the interference control request message on a designated sub-band is reduced by instructing the interfering network element to reduce transmitted power of the designated sub-band occupied by the network element receiving the interference control request message or transmitted power of the interfering network element UE on the designated sub-band, thereby reducing interference from the network element receiving the interference control request message to the interfered network element.

In further, an information element IE in the interference control request message may include one or more of the following cells: a message type (that is, the interference control request message), a bandwidth range of the designated sub-band occupied by a requested network element requested to be controlled (for instance, from aMHz to bMHz), an amount of interference on the interfered sub-band (that is, size of interference suffered by the interfered sub-band), an amount of interference or an interference level that needs to be controlled by the requested network element on the occupied designated sub-band, and a counting unit (for instance, a db value or a linear value) used by the requested network element when reporting the amount of interference on the occupied designated sub-band as controlled; the amount of interference on an interfered sub-band may be: one of a total interference power value on the interfered sub-band, a total received power value on the interfered sub-band, a quantization level of a total interference intensity on the interfered sub-band, and a quantization level of a total received intensity on the interfered sub-band; the amount of interference that needs to be controlled by the requested network element on the occupied designated sub-band may be a preset threshold value of maximum transmitted power of the requested network element on the occupied designated sub-band; or a reduced amount (that is, a relative amount of interference in relative to amount of current interference) of transmitted power that needs to be reduced by the requested network element on the occupied designated sub-band; or a transmitted power value (that is, an absolute amount of interference that needs to be controlled) after the reduction that needs to be performed by the requested network element on the occupied designated sub-band, an interference intensity that needs to be controlled by the requested network element on the occupied designated sub-band may be predefined, indicating an intensity of interference or a level of interference (for instance, high interference, low interference, etc.) from the inter-RAT network element to the occupied designated sub-band.

In further, in step S1004, the first network element may determine an interfering network element that needs to be performed interference control via an interference evaluation calculation, in this step, the first network element may also determine amount of interference that needs to be controlled by the requested network element on the occupied designated sub-band via a preset algorithm, that is, adjustment amount that needs to be adjusted by the interfering network element to transmitted power of the occupied designated sub-band.

In S1006, receiving an interference control response message replied by a network element capable of adjusting transmitted power of the occupied designated sub-band in the interfering network element.

In this step, if current transmitted power of the designated sub-band occupied by the interfering network element receiving the interference control request message can be reduced on the premise of ensuring a normal operation, the interfering network element receiving the interference control request message may reduce the transmitted power by reducing transmitted power of the interfering network element itself or a UE covered by the interfering network element, and reply an interference control response message to the first network element after reducing the transmitted power; whereas when current transmitted power of the designated sub-band cannot be reduced on the premise of ensuring a normal operation, the transmitted power is not reduced, and an interference control response message is not replied to the first network element.

In further, when the first network element cannot determine the interfering network element, after transmitting an interference control request message to an inter-RAT network element having a neighborhood relationship with the interfered network element and/or an inter-RAT network element having a connection relationship with the interfered network element, this step may be implemented as: receiving an interference control response message replied by a network element receiving the interference control request message.

In further, an information element IE in the interference control response message includes one or more of the following cells: a message type (that is, the interference control response message), an adjustment amount performed by a requested network element to transmitted power of the occupied designated sub-band (that is, an adjustment amount reported according to the counting unit used by the requested network element when reporting the controlled amount of interference as provided in the interference control request message received), whether the requested network element performs an adjustment to the transmitted power of the interfered sub-band (for instance, set an identifier to identify whether the requested network element performs the adjustment to the transmitted power of the interfered sub-band), and a range of the adjusted interfered sub-band, where, the adjustment amount performed by the requested network element to the transmitted power of the occupied designated sub-band may correspond to a request of the interference control request message, that is, may be an absolute amount of interference (that is, an amount after the adjustment performed by the requested network element to the transmitted power of the interfered sub-band) that needs to be controlled by the requested network element on the designated sub-band, and may also be a relative amount of interference in relative to the current amount of interference (that is, the adjustment amount performed by the requested network element to the transmitted power of the interfered sub-band), if the IE of the interference control response message does not include a range of the adjusted interfered sub-band, then it is defaults to that the range of the adjusted interfered sub-band is in consistent with the range of the designated sub-band requested in the interference control request.

In further, if the network element capable of adjusting the transmitted power of the interfered sub-band does not reply the interference control response message to the first network element, then do not implement this step.

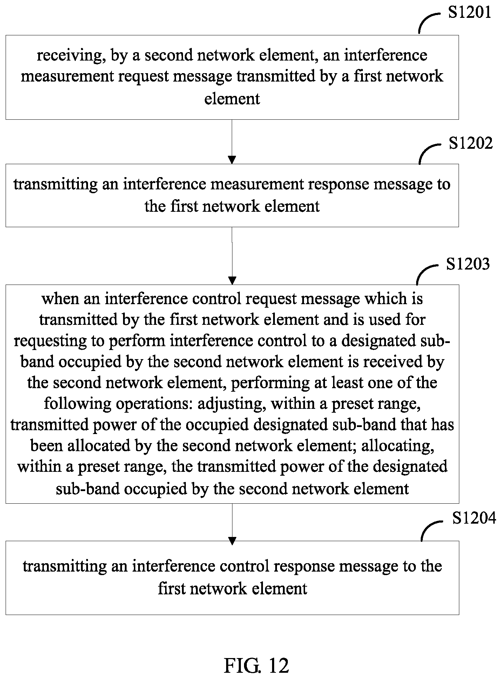

Another embodiment of the present invention provides a method for interference control, corresponding to last embodiment, this embodiment is applied in a network element governed by the SRC in the embodiment above, as shown in FIG. 12, specifically including the following steps:
S1201, receiving, by a second network element, an interference measurement request message transmitted by a first network element.

The interference measurement request message is used for requesting a power parameter of a designated sub-band occupied by the second network element, and the power parameter includes at least one of a received power RP and a received interference power.

S1202, transmitting an interference measurement response message to the first network element. The interference measurement response message is used for reporting the power parameter of the designated sub-band occupied by the second network element as measured by the second network element.

In further, this step may be specifically implemented as:
Step 1, when the second network element is able to measure the power parameter of the designated sub-band occupied by the second network element as requested in the interference measurement request, transmitting an interference measurement response message to the first network element, where, the interference measurement response message is used for reporting the power parameter of the designated sub-band occupied by the second network element as requested in the interference measurement request;
Step 2, when the second network element is not able to measure the power parameter of the designated sub-band occupied by the second network element as requested in the interference detection request, the second network element takes a sub-band which is determined according to the power parameter of the requested designated sub-band and frequency spectrum sharing information of the second network element as the designated sub-band occupied by the second network element;
Step 3, transmitting an interference measurement response message to the first network element, wherein, the interference measurement response message carries the power parameter of the determined designated sub-band occupied by the second network element.

In further, in step S1201, when the interference control request message transmitted by the first network element requests to report the power parameter of the designated sub-band occupied by the second network element via an interference control report message, step S1202 may be specifically implemented as:
S12021, transmitting the interference measurement report message to the first network element according to a preset transmitting rule.

The preset transmitting rule is a predefined transmitting rule, for instance, periodically transmitting an interference measurement report message, and closing the periodically transmitting of the interference measurement report message when unnecessary.

Transmitting the interference measurement report message to the first network element may be specifically implemented as:
Step 1, when the second network element is able to measure the power parameter of the designated sub-band occupied by the second network element as requested in the interference measurement request, transmitting an interference measurement report message to the first network element, where, the interference measurement report message is used for reporting the power parameter of the designated sub-band occupied by the second network element as requested in the interference measurement request; or
Step 2, when the second network element is not able to measure the power parameter of the designated sub-band occupied by the second network element as requested in the interference detection request, the second network element takes a sub-band which is determined according to the power parameter of the requested designated sub-band and frequency spectrum sharing information of the second network element as the designated sub-band occupied by the second network element; and
Step 3, transmitting an interference measurement report message to the first network element, where, the interference measurement report message carries the power parameter of the determined designated sub-band occupied by the second network element.

S1203, when an interference control request message which is transmitted by the first network element and is used for requesting to perform interference control to a designated sub-band occupied by the second network element is received by the second network element, performing at least one of the following operations: adjusting, within a preset range, transmitted power of the occupied designated sub-band that has been allocated by the second network element; allocating, within a preset range, the transmitted power of the designated sub-band occupied by the second network element.

In this step, for the interfered sub-band that has been allocated in the transmitted power of the interfered sub-band occupied by the second network element, transmitted power of the occupied designated sub-band that has been allocated by the second network element is adjusted within a preset range, for instance, when the transmitted power of the designated sub-band occupied by the second network element can be reduced on the premise of ensuring a normal operation, adjust the transmitted power of the designated sub-band occupied by the second network element, when the transmitted power of the designated sub-band occupied by the second network element cannot be reduced on the premise of ensuring a normal operation, the second network element may not transmit an interference control response message to the first network element, and may transmit an interference control response message indicating adjustment failure to the first network element; for the interfered sub-band that has not been allocated and is about to be allocated in the transmitted power of the interfered sub-band occupied by the second network element, transmitted power of the interfered sub-band to be newly allocated may be restricted, allocate transmitted power of the designated sub-band occupied by the second network element within the preset range.

S1204, transmitting an interference control response message to the first network element.

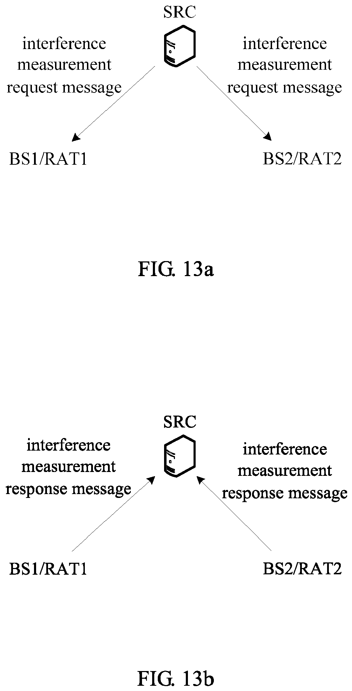

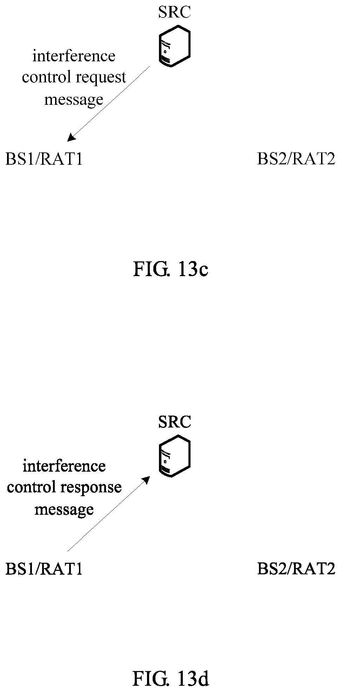

Corresponding to both embodiments described above, FIG. 13a - FIG. 13d are schematic diagrams of an interaction between a first network element and a governed network element, governed network elements BS1 (or RAT1) and BS2 (or RAT2) may be network elements in inter-RAT communication systems. As shown in FIG. 13a, a first network element SRC transmits an interference measurement request message to the governed network elements BS1 (or RAT1) and BS2 (or RAT2), as shown in FIG. 13b, the governed network elements BS1 and BS2 reply with an interference measurement response message to the first network element SRC, after it is determined that the governed network element BS2 is interfered by the BS1, as shown in FIG. 13c, the first network element SRC transmits an interference control request message to the governed network element BS1, as shown in FIG. 13d, the governed network element BS1 replies with an interference control response message to the first network element SRC.

In further, in this embodiment, the interference control response message may not be transmitted to the first network element.

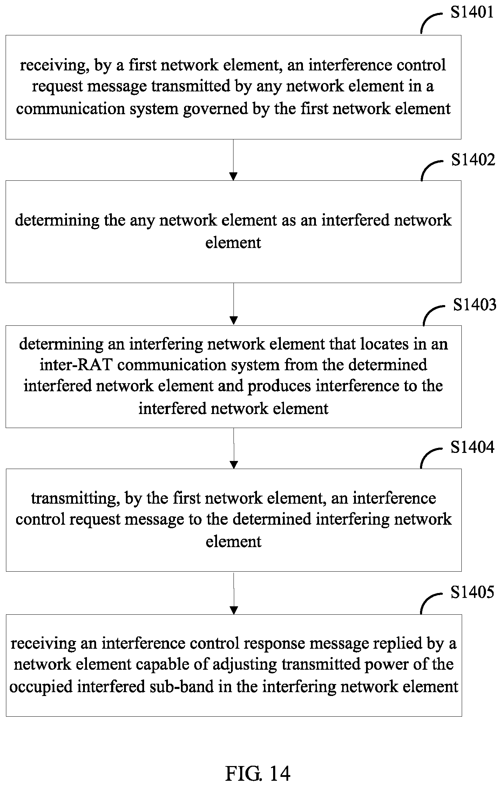

Another embodiment of the present invention provides a method for interference control, in this embodiment, the first network element is an SRC, and the SRC triggers to perform interference control to an interfering network element that causes interference to an interfered network element via an interference control request message transmitted by the interfered network element, this embodiment is applied in the first network element, as shown in FIG. 14, specifically including the following steps:
S1401, receiving, by a first network element, an interference control request message transmitted by any network element in a communication system governed by the first network element.

The interference control request message is used for requesting to perform interference control to an interfered sub-band occupied by the any network element.

In this step, the interference control request message may also request to perform interference control to an interfered whole band occupied by the any network element.

In this embodiment, the any network element may determine an interfered sub-band via a preset algorithm, for instance, determine a sub-band of which RP is greater than a preset RP threshold value in a bandwidth occupied by the network element as an interfered sub-band.

In further, at a side of the any network element, steps implemented correspondingly are:
When there is an interfered sub-band in the bandwidth occupied by the any network element, the any network element transmits an interference control request message to the first network element, where, the interference control request message is used for requesting to perform interference control to an interfered sub-band occupied by the any network element.

S1402, determining the any network element as an interfered network element.

In this step, before the any network element is determined as the interfered network element, it may also be judged whether the interfered sub-band occupied by the any network element is in compliance with a preset interference control condition. The preset interference control condition is a condition that is preset to determine whether the interfered sub-band occupied by the any network element needs to perform interference control, for instance, judge whether RP of the interfered sub-band is greater than preset RP, if yes, then it is determined that interference control needs to be performed to the interfered sub-band, and the any network element is determined as an interfered network element, if the interfered sub-band occupied by the any network element is not in compliance with a preset interference control condition, the any network element may not be determined as an interfered network element.

S1403, determining an interfering network element that locates in inter-RAT communication system from the interfered network element determined in S1402 and produces interference to the interfered network element.

In this step, the first network element may determine an interfering network having an inter-RAT from the interfered network element and producing interference to the interfered network element for each interfered network element determined in S1402, then, the interfering network element may be an inter-RAT network element having a shared sub-band with the interfered network element and a covered cell thereof and a cell covered by the interfered network element are adjacent cells.

In further, the first network element may determine the interfering network that needs to be performed interference control via an interference evaluation calculation, and may determine an adjustment amount that needs to be adjusted by the interfering network element to transmitted power of the occupied interfered sub-band via a preset algorithm.

In further, steps S1401∼S1403 are steps used by the first network element to determine an interfering network element, where, transmitted power of the designated sub-band occupied by the interfering network element needs to be adjusted.

S1404, transmitting, by the first network element, an interference control request message to the interfering network element determined in S 1403.

The interference control request message is used for requesting to perform interference control to an interfered sub-band occupied by the interfering network element.

In this step, according to an interfered condition of the interfered network element, when a designated sub-band occupied by the interfering network element produces interference to the interfered network element, the interference control request message may request to perform interference control to the designated sub-band, when a whole band occupied by the interfering network element produces interference to the interfered network element, the interference control request message may also request to perform interference control to the whole band occupied by the interfering network element.

In this step, the first network element reduces a power parameter of an interfered network element interfered by an interfering network element on an interfered sub-band by instructing the interfering network element to reduce transmitted power of the interfered sub-band occupied by the interfering network element or transmitted power of an interfering network element UE on the interfered sub-band, and thereby reducing interference from the interfering network element to the interfered network element.

S1405, receiving an interference control response message replied by a network element capable of adjusting transmitted power of the occupied interfered sub-band in the interfering network element.

In this step, if current transmitted power of an interfered sub-band occupied by an interfering network element receiving an interference control request message can be reduced on the premise of ensuring a normal operation, the interfering network element receiving the interference control request message may reduce the transmitted power by reducing transmitted power of the interfering network element itself or a UE covered by the interfering network element, and reply with an interference control response message to the first network element after reducing the transmitted power; whereas if current transmitted power of the interfered sub-band cannot be reduced on the premise of ensuring a normal operation, the transmitted power may not be reduced, and an interference control response message is not replied to the first network element.

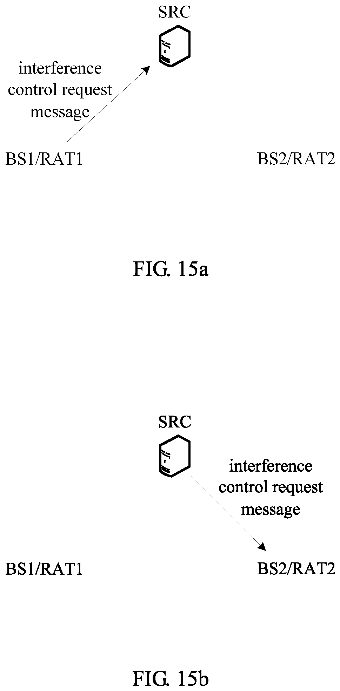

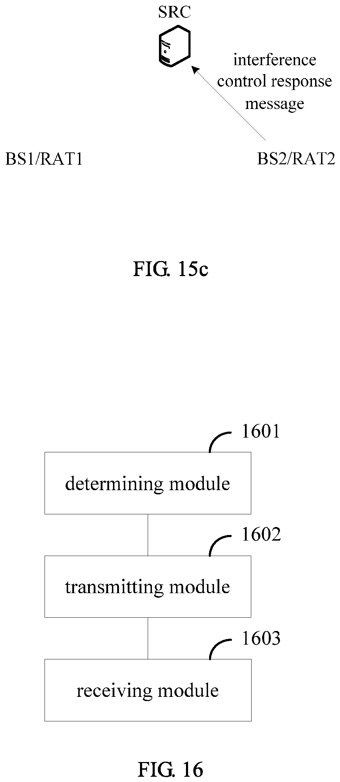

Corresponding to the embodiments above, FIG. 15a - FIG. 15c are schematic diagrams of an interaction between a first network element and a governed network element, network elements BS1 (or RAT1) and BS2 (or RAT2) may be network elements in inter-RAT communication systems. As shown in FIG. 15a, any network element BS1 (or RAT1) transmits an interference control request to a first network element SRC, as shown in FIG. 15b, the first network element transmits the interference control request to an interfering network element BS2 (or RAT2) which causes interference to the BS1, as shown in FIG. 15c, the interfering network element BS2 transmits an interference control response message to the first network element SRC.

In further, if a network element capable of adjusting transmitted power of the interfered sub-band described above does not reply with the interference control response message to the first network element, then do not proceed with this step.

In further, for each requested network element (a second network element) which receives an interference control request and needs to perform interference control, embodiments of the present invention also provide a method for performing interference control by a second network element according to an received interference control request, the second network element may use one or more of the following manners to adjust, within a preset range, transmitted power of an occupied designated sub-band that has been allocated by the second network element to perform the interference control:
A first manner: for a terminal which locates between a cell governed by the second network element and a cell governed by an interfered network element, locates at an edge of the cell governed by the second network element, and occupies a designated sub-band, reduce transmitted power of the terminal so that the transmitted power of the terminal is less than a preset maximum transmitted power threshold value or so that the transmitted power of the terminal is reduced by a preset value.

In the first manner, the second network element or a network element governed by the second network element may be adjacent to a network element having an inter-RAT, then a signal transmitted from a terminal which locates at an edge of a cell governed by the second network element and is close to a side of a cell governed by the interfered network element is a strong interference signal for the adjacent inter-RAT network element.

In further, the adjacent inter-RAT network element may use the method for interference control provided in embodiments of the present invention to transmit the interference control request to the second network element directly, and may also transmit the interference control request to the second network element via an SRC, when receiving the interference control request, for a terminal which locates between a cell governed by the second network element and a cell governed by an interfered network element, and locates at an edge (that is: locates at an edge of a cell governed by the second network element and is close to a side of a cell governed by the interfered network element) of the cell governed by the second network element, and which occupies the designated sub-band, the second network element may reduce transmitted power of a terminal to reduce interference from the terminal to the adjacent inter-RAT network element on the designated sub-band. Moreover, a preset maximum transmitted power threshold value or a preset value that needs to be reduced may be carried in the interference control request message, so that transmitted power of the terminal occupying the designated sub-band as governed by the second network element is less than the preset maximum transmitted power threshold value or the transmitted power of the terminal is reduced by a preset value based on the original one.

In further, when the second network element is a base station controller, a cell governed by the second network element may be a cell covered by a base station governed by the second network element, when the second network element is a base station, a cell governed by the second network element may be a cell covered by the second network element.

A second manner: for a terminal within a cell governed by the second network element, adjust transmitted power of the terminal so that the transmitted power of the terminal is less than a preset maximum transmitted power threshold value.

In the second manner, transmitter power adjustment may be performed for all terminals within a cell governed by the second network element so that transmitted power of all terminals is less than the preset maximum transmitted power threshold value.

A third manner: for terminals which locate between a cell governed by the second network element and a cell governed by an interfered network element, and locate at an edge of the cell governed by the second network element, and which occupy a designated sub-band, reduce an amount of the terminals scheduled at a same time.

In the third manner, for terminals which locate at an edge of a cell governed by the second network element and are close to a side of a cell governed by the interfered network element, and which occupy the designated sub-band, total power of signals transmitted from the terminals at a same time can be reduced by reducing an amount of the terminals scheduled at the same time, that is to say, time for scheduling the terminals may be staggered, then total power of signals transmitted from a plurality of terminals simultaneously at a certain time may be reduced.

A fourth manner: when the second network element is a network element in an LTE RAT communication system, for a terminal which locates between a cell governed by the second network element and a cell governed by an interfered network element, locates at a cell governed by the second network element, and occupies a designated sub-band, perform at least one of the following operations when performing data transmission with the terminal: reduce transmitted power of each resource block carrying data, and increase amount of resource blocks used for carrying data.

In the fourth manner, for the second network element in an LTE mode communication system, for a terminal which locates at a cell governed by the second network element and is close to a side of a cell governed by an interfered network element, and occupies a designated sub-band, data transmission rate may be ensured by reducing transmitted power of each resource block carrying data and/or increasing amount of resource blocks used for carrying data when data transmission with the terminal is performed, and thereby reducing interference therefrom to a cell governed by the interfered network element.

In further, one or more of the following manners may be used to allocate, within the preset range, transmitted power of the designated sub-band occupied by the second network element to perform interference control:
A first manner: for a terminal in a cell governed by the second network element, when it needs to allocate a designated sub-band for the terminal, control transmitted power of the terminal on the designated sub-band to be no more than a preset maximum transmitted power threshold value.
A second manner: for terminals in a cell governed by the second network element, allocate a designated sub-band for a terminal satisfying at least one of the following conditions for use: a cell center terminal of which transmitted power is less than a preset power threshold value, a terminal having a distance which is no less than a preset distance threshold value from an interfered network element, and a terminal having a path loss difference, between a path loss to the interfered network element and a path loss to a cell in which the terminal locates, which is greater than a preset threshold, where, the preset distance threshold value or the preset threshold is used for ensuring that there is no interference to the interfered network element when a signal transmitted from the terminal is transmitted to the interfered network element.

In the second manner, since the interference control request carries information about a designated sub-band suffering interference, in order to reduce interference on the designated sub-band, for a terminal which locates at a cell governed by the second network element and is close to a side of a cell governed by an interfered network element, the designated sub-band may be allocated for a terminal of which transmitted power is less than a preset power threshold value for use, and sub-bands except the designated sub-band in a bandwidth occupied by the second network element are allocated for a terminal of which transmitted power is no less than the preset power threshold value for use, for instance, transmitted power of a center user in a cell governed by the second network element is relatively low, the designated sub-band may be allocated for the center user for use, and transmitted power of an edge user in a cell governed by the second network element is relatively high, sub-bands except the designated sub-band in the occupied bandwidth may be allocated for the edge user for use; moreover, the designated sub-band may also be allocated for a terminal having a distance which is no less than a preset distance threshold value from the interfered network element for use, and/or allocated for a terminal having a path loss difference, between a path loss to the interfered network element and a path loss to a cell in which the terminal locates, which is greater than a preset threshold for use, since the preset distance threshold value or the preset threshold can ensure that there is no interference to an interfered network element when a signal transmitted from the terminal is transmitted to the interfered network element, thus, allocating the interfered sub-band for a terminal having a distance of no less than a preset distance threshold value from the interfered network element for use, and/or for a terminal having a path loss difference, between a path loss to the interfered network element and a path loss to a cell in which the terminal locates, which is greater than a preset threshold for use, can ensure that a terminal does not cause interference to an interfered network element on a designated sub-band.

A third manner: when the interference control request message also carries information of a period of time that a requested network element needs to perform interference control to an occupied designated sub-band, for a terminal which locates in a cell governed by the second network element, allocate the designated sub-band for a terminal of which transmitted power is less than a preset power threshold value for use in the period of time that the interference control is needed.

In the third manner, the interference control request message may also carries information of a period of time that a requested network element needs to perform interference control to an occupied designated sub-band; then, for terminals which locate in a cell governed by the second network element, the second network may schedule a terminal (for instance, a center user) of which transmitted power is less than a preset power threshold value in the period of time that the interference control is needed according to the information of the period of time, and schedule a terminal (for instance, an edge user which is close to a cell governed by the interfered network element and in a cell governed by the second network element) of which transmitted power is no less than the preset power threshold value outside the period of time that the interference control is needed.

Based on a same inventive concept, embodiments of the present invention also provide an apparatus for interference control and a network element device, since the principle for solving a problem by the apparatuses and network element devices is similar to the methods for interference control described above, thus reference may be made to implementations of the method described above for implementations of the apparatus and the network element device, which will not be repeated herein.

Embodiments of the present invention provide a first apparatus for interference control, as shown in FIG. 16, including:
a determining module 1601, configured to determine an interfered sub-band from a bandwidth occupied by the determining module; and
a transmitting module 1602, configured to transmit an interference control request message to an inter-RAT network element, where, the interference control request message is used for requesting the inter-RAT network element to perform interference control to the interfered sub-band determined by the determining module 1601; a communication system in which the inter-RAT network element locates is an inter-RAT communication system from a communication system in which the apparatus locates.

In further, the apparatus also includes: a receiving module 1603;

The receiving module 1603 is configured to receive an interference control response message replied by a network element capable of adjusting transmitted power of the interfered sub-band in the inter-RAT network element for the interference control request message transmitted by the transmitting module 1602.

In further, an information element IE in the interference control request message transmitted by the transmitting module 1602 includes one or more of the following cells: a message type, a bandwidth range of the interfered sub-band requested to be controlled, an amount of interference on the interfered sub-band, an amount of interference or an interference level that needs to be controlled by a requested network element on the interfered sub-band, and a counting unit used by the requested network element when reporting a controlled amount of interference.

In further, an information element IE in the interference control response message received by the receiving module 1603 includes one or more of the following cells: a message type, an adjustment amount performed by a requested network element to transmitted power of the interfered sub-band, whether the requested network element performs an adjustment to the transmitted power of the interfered sub-band, and a range of the interfered sub-band adjusted by the requested network element.

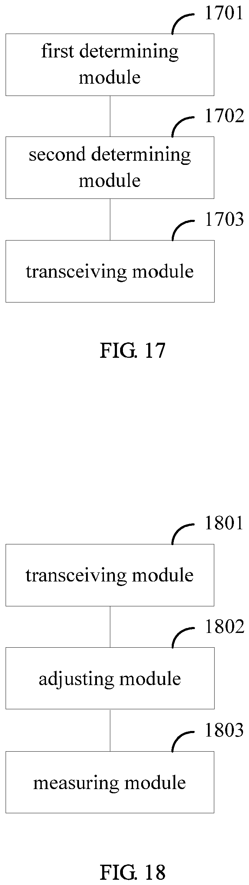

In further, the transmitting module 1602 is specifically configured to transmit the interference control request message to the inter-RAT network element via a direct interface with the inter-RAT network element; or transmit the interference control request message to the inter-RAT network element via an operation administration and maintenance OAM that has a connection relationship with both a communication system in which the apparatus for interference control locates and a communication system in which the inter-RAT network element locates; or transmit the interference control request message to the inter-RAT network element via a core network node that has a connection relation with both the apparatus for interference control and the inter-RAT network element, where, the interference control request message is carried by a radio access network information management RIM message. Embodiments of the present invention provide a second apparatus for interference control, as shown in FIG. 17, including:
a first determining module 1701, configured to determine an interfered network element in an inter-RAT communication system;
a second determining module 1702, configured to determine an interfering network element that locates in an inter-RAT communication system from the interfered network element determined by the first determining module 1701 and produces interference to the interfered network element; and
a transceiving module 1703, configured to transmit an interference control request message to the interfering network element determined by the second determining module 1702, where, the interference control request message is used for requesting to perform interference control to a designated sub-band occupied by the interfering network element.

In further, the transceiving module 1703 is also configured to, when the interfering network element cannot be determined by the second determining module 1702, transmit an interference control message to a network element in an inter-RAT communication system that has at least one of the following relationships with the interfered network element: a network element in an inter-RAT communication system that has a neighborhood relationship with the interfered network element; a network element in an inter-RAT communication system that has a connection relationship with the interfered network element, where, the interference control request message is used for requesting to perform interference control to a designated sub-band occupied by a network element receiving the interference request message.

In further, the transceiving module 1703 is also configured to receive an interference control response message replied by a network element capable of adjusting transmitted power of the occupied designated sub-band in the interfering network element for the transmitted interference control request message.

In further, the transceiving module 1703 is also configured to, after transmitting the interference control request message to the interfering network element, receive an interference control response message replied by the network element receiving the interference request message.

In further, the transceiving module 1703 is also configured to, before the first determining module 1701 determines the interfered network element, transmit an interference measurement request message to a network element in an inter-RAT communication system governed by a device in which the apparatus locates; receive an interference measurement response message transmitted by the governed network element for the interference measurement request message, where, the interference measurement request message is used for requesting a power parameter of the designated sub-band occupied by the network element governed, where, the power parameter includes at least one of a received power and a received interference power, and the interference measurement response message is used by the governed network element to report the power parameter of the designated sub-band occupied by the governed network element as measured;

The first determining module 1701 is specifically configured to determine a network element which is in compliance with a preset interference determining condition and in the governed network elements as the interfered network element according to the power parameter of the designated sub-band occupied by the governed network element measured by the governed network element as received by the transceiving module 1703.

In further, an information element IE in the interference measurement request message transmitted by the transceiving module 1703 includes one or more of the following cells: a message type, a bandwidth range of the designated sub-band occupied by a requested network element requested to be reported, and a counting unit used by the requested network element when reporting the power parameter of the occupied designated sub-band;
an information element IE in the interference measurement response message received by the transceiving module 1703 includes: a message type and a power parameter of an occupied designated sub-band measured by the requested network element, where, the occupied designated sub-band measured by the requested network element is the designated sub-band requested in the interference measurement request message.

In further, the information element IE in the interference measurement response message received by the transceiving module 1703 also includes: a segment granularity of the occupied designated sub-band measured by the requested network element.

In further, the transceiving module 1703 is also configured to, before the first determining module 1701 determines the interfered network element, transmit an interference measurement request message to a network element in an inter-RAT communication system governed by a device in which the apparatus locates; receive an interference measurement report message transmitted by the governed network element for the interference measurement request message according to a preset receiving rule, where, the interference measurement request message is used for requesting the governed network element to report a power parameter of the occupied designated sub-band via the interference measurement report message, where, the power parameter includes at least one of a received power and a received interference power;

The first determining module 1701 is specifically configured to, determine a network element that is in compliance with a preset interference determining condition and is in the governed network element as the interfered network element according to the power parameter of the designated sub-band occupied by the governed network element which is measured by the governed network element and is carried in the interference measurement report message received by the transceiving module 1703.

In further, an information element IE in the interference measurement request message transmitted by the transceiving module 1703 includes one or more of the following cells: a message type, a bandwidth range of a designated sub-band occupied by a requested network element requested to be reported, and a counting unit used by the requested network element when reporting the power parameter of the occupied designated sub-band;

An information element IE in the interference measurement report message received by the transceiving module 1703 includes: a message type and a power parameter of an occupied designated sub-band measured by the requested network element, where, the occupied designated sub-band measured by the requested network element is the designated sub-band requested in the interference measurement request message.

In further, the information element IE in the interference measurement report message received by the transceiving module 1703 also includes: a segment granularity of the occupied designated sub-band measured by the requested network element.

In further, the transceiving module 1703 is also configured to receive an interference control request message transmitted by any network element in a communication system governed by a device in which the apparatus locates, where, the interference control request message is used for requesting to perform interference control to an interfered sub-band occupied by the any network element;

The first determining module 1701 is specifically configured to determine the any network element as the interfered network element.

In further, an information element IE in the interference control request message transmitted by the transceiving module 1703 includes one or more of the following cells: a message type, a bandwidth range of a designated sub-band occupied by a requested network element requested to be controlled, an amount of interference on the interfered sub-band, an amount of interference or an interference level that needs to be controlled by the requested network element on the occupied designated sub-band, and a counting unit used by the requested network element when reporting the amount of interference of an occupied designated sub-band as controlled.

In further, the amount of interference on the interfered sub-band in the interference control request message is specifically one of a total interference power value on the interfered sub-band, a total receiving power value on the interfered sub-band, a quantization level of a total interference intensity on the interfered sub-band, and a quantization level of a total receiving intensity on the interfered sub-band.

In further, the amount of interference that needs to be controlled by the requested network element on the occupied designated sub-band in the interference control request message is specifically: a preset threshold value of maximum transmitted power of the requested network element on the occupied designated sub-band; or a reduced amount of transmitted power that needs to be reduced by the requested network element on the occupied designated sub-band; or a transmitted power value after a reduction that needs to be performed by the requested network element on the occupied designated sub-band.

In further, an information element IE in the interference control response message received by the transceiving module 1703 includes one or more of the following cells: a message type, an adjustment amount performed by a requested network element to transmitted power of the occupied designated sub-band, whether the requested network element performs an adjustment to the transmitted power of the interfered sub-band, and a range of the interfered sub-band adjusted by the requested network element.

In further, the adjustment amount performed by the requested network element to the transmitted power of the interfered sub-band is specifically: an amount adjusted by the requested network element to the transmitted power of the interfered sub-band; or an amount after the adjustment is performed by the requested network element to the transmitted power of the interfered sub-band. Embodiments of the present invention provide a third apparatus for interference control, as shown in FIG. 18, including:
a transceiving module 1801, configured to receive an interference control request message transmitted by a first network element, where the interference control request message is used for requesting to perform interference control to a designated sub-band occupied by a device in which the apparatus locates;
an adjusting module 1802, configured to perform at least one of the following operations: adjust, within a preset range, transmitted power of the occupied designated sub-band that has been allocated by the second network element; allocate, within a preset range, the transmitted power of the designated sub-band occupied by the second network element, where,
the first network element and the device in which the apparatus locates are network elements in inter-RAT communication systems respectively, or, the first network element is a single radio access network controller SRC that is configured to allocate resources occupied by network elements in an inter-RAT communication system, and the device in which the apparatus locates is a network element in any communication system.

In further, the transceiving module 1801 is also configured to transmit an interference control response message of the interference control request message received to the first network element.

In further, the transceiving module 1801 is also configured to, before receiving the interference control request message transmitted by the first network element, receive an interference measurement request message transmitted by the first network element; and transmit an interference measurement response message to the first network element for the interference measurement request message, where, the interference measurement request message is used for requesting a power parameter of the designated sub-band occupied by the device in which the apparatus locates, the power parameter includes at least one of a received power and a received interference power, the interference measurement response message is used for reporting the power parameter of the designated sub-band occupied by the device as measured by the device in which the apparatus locates, and the first network element is the SRC.

In further, the apparatus also includes: a measuring module 1803;

The measuring module 1803 is configured to measure the power parameter of the designated sub-band occupied by the device requested in the interference measurement request received by the transceiving module 1801;

The transceiving module 1801 is specifically configured to, when the measuring module 1803 is able to measure the power parameter of the designated sub-band occupied by the device in which the apparatus locates as requested in the interference measurement request, transmit an interference measurement response message to the first network element, where, the interference measurement response message is used for reporting the power parameter of the designated sub-band occupied by the device as requested in the interference measurement request; or
when the measuring module 1803 is not able to measure the power parameter of the designated sub-band occupied by the device as requested in the interference measurement request, take a sub-band which is determined according to the power parameter of the requested designated sub-band and frequency spectrum sharing information of the device as the designated sub-band occupied by the device; transmit an interference measurement response message to the first network element, where, the interference measurement response message carries a power parameter of the determined designated sub-band occupied by the device.

In further, an information element IE in the interference measurement request message received by the transceiving module 1801 includes one or more of the following cells: a message type, a bandwidth range of a designated sub-band occupied by a requested network element requested to be reported, and a counting unit used by the requested network element when reporting the power parameter of the occupied designated sub-band;

An information element IE in the interference measurement response message transmitted by the transceiving module 1801 includes: a message type and a power parameter of the occupied designated sub-band measured by the requested network element.

In further, the information element IE in the interference measurement response message transmitted by the transceiving module 1801 also includes: a segment granularity of the occupied designated sub-band measured by the requested network element.

In further, the transceiving module 1801 is also configured to, before receiving the interference control request message transmitted by the first network element, receive an interference measurement request message transmitted by the first network element; and transmit an interference measurement report message to the first network element for the interference measurement request message according to a preset transmitting rule, where, the interference measurement request message is used for requesting to report a power parameter of the designated sub-band occupied by the device in which the apparatus locates via an interference measurement report message, where, the power parameter includes at least one of a received power and a received interference power, the first network element is the SRC.

In further, the apparatus also includes: a measuring module 1803;

The measuring module 1803 is configured to measure the power parameter of the designated sub-band occupied by the device requested in the interference measurement request received by the transceiving module 1801;

The transceiving module 1801 is specifically configured to, when the measuring module 1803 is able to measure the power parameter of the designated sub-band occupied by the device in which the apparatus locates as requested in the interference measurement request, transmit an interference measurement report message to the first network element, where, the interference measurement report message is used for reporting the power parameter of the designated sub-band occupied by the device as requested in the interference measurement request; or
when the measuring module 1803 is not able to measure the power parameter of the designated sub-band occupied by the device as requested in the interference measurement request, take a sub-band which is determined according to the power parameter of the requested designated sub-band and frequency spectrum sharing information of the device as the designated sub-band occupied by the device; transmit an interference measurement report message to the first network element, where, the interference measurement report message carries a power parameter of the determined designated sub-band occupied by the device.

In further, an information element IE in the interference measurement request message received by the transceiving module 1801 includes one or more of the following cells: a message type, a bandwidth range of a designated sub-band occupied by a requested network element requested to be reported, and a counting unit used by the requested network element when reporting the power parameter of the occupied designated sub-band;

An information element IE in the interference measurement report message transmitted by the transceiving module 1801 includes: a message type and a power parameter of the occupied designated sub-band measured by the requested network element.

In further, the information element IE in the interference measurement report message transmitted by the transceiving module 1801 also includes: a segment granularity of the occupied designated sub-band measured by the requested network element.

In further, the transceiving module 1801 is also configured to, when there is an interfered sub-band in a bandwidth occupied by the device in which the apparatus locates, transmit an interference control request message to the first network element, where, the interference control request message is used for requesting to perform interference control to the interfered sub-band occupied by the device, and the first network element is the SRC.

In further, an information element IE in the interference control request message received by the transceiving module 1801 includes one or more of the following cells: a message type, a bandwidth range of the designated sub-band occupied by a requested network element requested to be controlled, an amount of interference on the interfered sub-band, an amount of interference or an interference level that needs to be controlled by the requested network element on the occupied designated sub-band, and a counting unit used by the requested network element when reporting the amount of interference of an occupied designated sub-band as adjusted.

In further, an information element IE in the interference control response message transmitted by the transceiving module 1801 includes one or more of the following cells: a message type, a bandwidth range of the occupied designated sub-band adjusted by the requested network element, adjustment amount performed to transmitted power of the occupied designated sub-band, and whether the requested network element performs an adjustment to the transmitted power of the interfered sub-band.

In further, the adjusting module 1802 is specifically configured to: use one or more of the following manners to adjust, within the preset range, the transmitted power of an occupied designated sub-band that has been allocated by the device in which the apparatus locates: for a terminal which locates between a cell governed by the device in which the apparatus locates and a cell governed by an interfered network element, locates at an edge of the cell governed by the device in which the apparatus locates, and occupies the designated sub-band, reduce transmitted power of the terminal so that the transmitted power of the terminal is less than a preset maximum transmitted power threshold value or the transmitted power of the terminal is reduced by a preset value; for a terminal within a cell governed by the device in which the apparatus locates, adjust transmitted power of a terminal so that transmitted power of the terminal is less than a preset maximum transmitted power threshold value; for terminals which locate between a cell governed by the device in which the apparatus locates and a cell governed by an interfered network element, locate at an edge of the cell governed by the device in which the apparatus locates, and occupy the designated sub-band, reduce an amount of the terminals scheduled at a same time; when the device in which the apparatus locates is a network element in an LTE RAT communication system, for a terminal which locates between a cell governed by the device in which the apparatus locates and a cell governed by an interfered network element, locates at the cell governed by the device in which the apparatus locates, and occupies the designated sub-band, perform at least one of the following operations when performing data transmission with the terminal: reduce transmitted power of each resource block carrying data, and increase amount of resource blocks used for carrying data;

Use one or more of the following manners to allocate, within the preset range, transmitted power of the designated sub-band occupied by the device in which the apparatus locates: for a terminal in a cell governed by the device in which the apparatus locates, when it needs to allocate the designated sub-band for the terminal, control transmitted power of the terminal on the designated sub-band to be no more than a preset maximum transmitted power threshold value; for terminals in a cell governed by the device in which the apparatus locates, allocate a designated sub-band for a terminal satisfying at least one of the following conditions for use: a cell center terminal of which transmitted power is less than a preset power threshold value, a terminal having a distance which is no less than a preset distance threshold value from an interfered network element, and a terminal having a path loss difference, between a path loss to the interfered network element and a path loss to a cell in which the terminal locates, which is greater than a preset threshold, where, the preset distance threshold value or the preset threshold is used for ensuring that there is no interference to the interfered network element when a signal transmitted from the terminal is transmitted to the interfered network element; when the interference control request message also carries time range information of a period of time that a requested network element needs to perform interference control to an occupied designated sub-band, for a terminal which locates in a cell governed by the device in which the apparatus locates, allocate the designated sub-band for a terminal of which transmitted power is less than a preset power threshold value for use in the period of time that the interference control is needed.

Embodiments of the present invention provide a network element, including: the first apparatus for interference control described above.

Preferably, the network element according to this embodiment may be an access network element in any RAT communication system.

Embodiments of the present invention provide an SRC, including: the second apparatus for interference control described above.

Embodiments of the present invention provide a network element, including: the third apparatus for interference control described above.

Preferably, the network element according to this embodiment may be an access network element in any RAT communication system.

Based on a same inventive concept, embodiments of the present invention also provide an apparatus for interference control and a network element device, since the principle for solving a problem by the apparatuses and network element devices is similar to the methods for interference control described above, thus reference may be made to implementations of the method described above for implementations of the apparatuses and the network element devices, which will not be repeated herein.

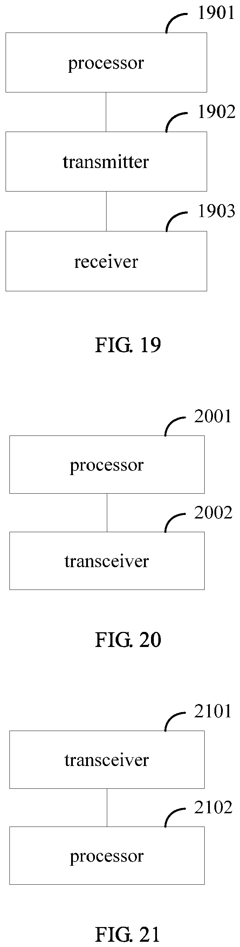

Embodiments of the present invention provide a fourth apparatus for interference control, as shown in FIG. 19, including:
a processor 1901, configured to determine an interfered sub-band from a bandwidth occupied by the processor; and
a transmitter 1902, configured to transmit an interference control request message to an inter-RAT network element, where, the interference control request message is used for requesting the inter-RAT network element to perform interference control to the interfered sub-band determined by the processor 1901; a communication system in which the inter-RAT network element locates is an inter-RAT communication system from a communication system in which the apparatus locates.

In further, the apparatus also includes: a receiver 1903;

The receiver 1903 is configured to receive an interference control response message replied by a network element capable of adjusting transmitted power of the interfered sub-band in the inter-RAT network element for the interference control request message transmitted by the transmitter 1902.

In further, an information element IE in the interference control request message transmitted by the transmitter 1902 includes one or more of the following cells: a message type, a bandwidth range of the interfered sub-band requested to be controlled, an amount of interference on the interfered sub-band, an amount of interference or an interference level that needs to be controlled by a requested network element on the interfered sub-band, and a counting unit used by the requested network element when reporting a controlled amount of interference.

In further, an information element IE in the interference control response message received by the receiver 1903 includes one or more of the following cells: a message type, an adjustment amount performed by a requested network element to transmitted power of the interfered sub-band, whether the requested network element performs an adjustment to the transmitted power of the interfered sub-band, and a range of the interfered sub-band adjusted by the requested network element.

In further, the transmitter 1902 is specifically configured to transmit the interference control request message to the inter-RAT network element via a direct interface with the inter-RAT network element; or transmit the interference control request message to the inter-RAT network element via an operation administration and maintenance OAM that has a connection relationship with both a communication system in which the apparatus for interference control locates and a communication system in which the inter-RAT network element locates; or transmit the interference control request message to the inter-RAT network element via a core network node that has a connection relation with both the apparatus for interference control and the inter-RAT network element, where, the interference control request message is carried by a radio access network information management RIM message.

Embodiments of the present invention provide a fifth apparatus for interference control, as shown in FIG. 20, including:
a processor 2001, configured to determine an interfered network element in an inter-RAT communication system; and determine an interfering network element that locates in an inter-RAT communication system from the interfered network element and produces interference to the interfered network element; and
a transceiver 2002, configured to transmit an interference control request message to the interfering network element determined by the processor 2001, where, the interference control request message is used for requesting to perform interference control to a designated sub-band occupied by the interfering network element.

In further, the transceiver 2002 is also configured to, when the interfering network element cannot be determined by the processor 2001, transmit an interference control message to a network element in an inter-RAT communication system that has at least one of the following relationships with the interfered network element: a network element in an inter-RAT communication system that has a neighborhood relationship with the interfered network element; a network element in an inter-RAT communication system that has a connection relationship with the interfered network element, where, the interference control request message is used for requesting to perform interference control to a designated sub-band occupied by a network element receiving the interference request message.

In further, the apparatus, the transceiver 2002 is also configured to receive an interference control response message replied by a network element capable of adjusting transmitted power of the occupied designated sub-band in the interfering network element for the interference control request message transmitted by the transmitter 2002.

In further, the transceiver 2002 is also configured to, after transmitting the interference control request message to the interfering network element, receive an interference control response message replied by the network element receiving the interference request message.

In further, the transceiver 2002 is also configured to, before the processor 2001 determines the interfered network element, transmit an interference measurement request message to a network element in an inter-RAT communication system governed by a device in which the apparatus locates; receive an interference measurement response message transmitted by the governed network element for the interference measurement request message, where, the interference measurement request message is used for requesting a power parameter of the designated sub-band occupied by the network element governed, where, the power parameter includes at least one of a received power and a received interference power, and the interference measurement response message is used by the governed network element to report the power parameter of the designated sub-band occupied by the governed network element as measured; The processor 2001 is specifically configured to determine a network element which is in compliance with a preset interference determining condition and in the governed network elements as the interfered network element according to the power parameter of the designated sub-band occupied by the governed network element measured by the governed network element as received by the transceiver 2002.

In further, an information element IE in the interference measurement request message transmitted by the transceiver 2002 includes one or more of the following cells: a message type, a bandwidth range of the designated sub-band occupied by a requested network element requested to be reported, and a counting unit used by the requested network element when reporting the power parameter of the occupied designated sub-band;

An information element IE in the interference measurement response message received by the transceiver 2002 includes: a message type and a power parameter of an occupied designated sub-band measured by the requested network element, where, the occupied designated sub-band measured by the requested network element is the designated sub-band requested in the interference measurement request message.

In further, the information element IE in the interference measurement response message received by the transceiver 2002 also includes: a segment granularity of the occupied designated sub-band measured by the requested network element.

In further, the transceiver 2002 is also configured to, before the processor 2001 determines the interfered network element, transmit an interference measurement request message to a network element in an inter-RAT communication system governed by a device in which the apparatus locates; receive an interference measurement report message transmitted by the governed network element for the interference measurement request message according to a preset receiving rule, where, the interference measurement request message is used for requesting the governed network element to report a power parameter of the occupied designated sub-band via the interference measurement report message, where, the power parameter includes at least one of a received power and a received interference power;

The processor 2001 is specifically configured to determine a network element that is in compliance with a preset interference determining condition and is in the governed network element as the interfered network element according to the power parameter of the designated sub-band occupied by the governed network element which is measured by the governed network element and is carried in the interference measurement report message received by the transceiver 2002.

In further, an information element IE in the interference measurement request message transmitted by the transceiver 2002 includes one or more of the following cells: a message type, a bandwidth range of a designated sub-band occupied by a requested network element requested to be reported, and a counting unit used by the requested network element when reporting the power parameter of the occupied designated sub-band;

An information element IE in the interference measurement report message received by the transceiver 2002 includes: a message type and a power parameter of an occupied designated sub-band measured by the requested network element, where, the occupied designated sub-band measured by the requested network element is the designated sub-band requested in the interference measurement request message.

In further, the information element IE in the interference measurement report message received by the transceiver 2002 also includes: a segment granularity of the occupied designated sub-band measured by the requested network element.

In further, the transceiver 2002 is also configured to receive an interference control request message transmitted by any network element in an inter-RAT communication system governed by a device in which the apparatus locates, where, the interference control request message is used for requesting to perform interference control to an interfered sub-band occupied by the any network element;

The processor 2001 is specifically configured to determine the any network element as the interfered network element.

In further, an information element IE in the interference control request message transmitted by the transceiver 2002 includes one or more of the following cells: a message type, a bandwidth range of a designated sub-band occupied by a requested network element requested to be controlled, an amount of interference on the interfered sub-band, an amount of interference or an interference level that needs to be controlled by the requested network element on the occupied designated sub-band, and a counting unit used by the requested network element when reporting the amount of interference of an occupied designated sub-band as controlled.

In further, the amount of interference on the interfered sub-band in the interference control request message is specifically one of a total interference power value on the interfered sub-band, a total receiving power value on the interfered sub-band, a quantization level of a total interference intensity on the interfered sub-band, and a quantization level of a total receiving intensity on the interfered sub-band.

In further, the amount of interference that needs to be controlled by the requested network element on the occupied designated sub-band in the interference control request message is specifically: a preset threshold value of maximum transmitted power of the requested network element on the occupied designated sub-band; or a reduced amount of transmitted power that needs to be reduced by the requested network element on the occupied designated sub-band; or a transmitted power value after a reduction that needs to be performed by the requested network element on the occupied designated sub-band.

In further, an information element IE in the interference control response message received by the transceiver 2002 includes one or more of the following cells: a message type, an adjustment amount performed by a requested network element to transmitted power of the occupied designated sub-band, whether the requested network element performs an adjustment to the transmitted power of the interfered sub-band, and a range of the interfered sub-band adjusted by the requested network element.

In further, the adjustment amount performed by the requested network element to the transmitted power of the interfered sub-band is specifically: an amount adjusted by the requested network element to the transmitted power of the interfered sub-band; or an amount after the adjustment is performed by the requested network element to the transmitted power of the interfered sub-band. Embodiments of the present invention provide a sixth apparatus for interference control, as shown in FIG. 21, including:
a transceiver 2101, configured to receive an interference control request message transmitted by a first network element, where the interference control request message is used for requesting to perform interference control to a designated sub-band occupied by a device in which the apparatus locates;
a processor 2102, configured to perform at least one of the following operations: adjust, within a preset range, transmitted power of the occupied designated sub-band that has been allocated by the second network element; allocate, within a preset range, the transmitted power of the designated sub-band occupied by the second network element, where,
the first network element and the device in which the apparatus locates are network elements in inter-RAT communication systems respectively, or, the first network element is a single radio access network controller SRC that is configured to allocate resources occupied by network elements in each inter-RAT communication system, and the device in which the apparatus locates is a network element in any communication system.

In further, the transceiver 2101 is also configured to transmit an interference control response message to the first network element for the interference control request message received by the transceiver 2101.

In further, the transceiver 2101 is also configured to, before receiving the interference control request message transmitted by the first network element, receive an interference measurement request message transmitted by the first network element; and transmit an interference measurement response message to the first network element for the interference measurement request message, where, the interference measurement request message is used for requesting a power parameter of the designated sub-band occupied by the device in which the apparatus locates, the power parameter includes at least one of a received power and a received interference power, the interference measurement response message is used for reporting the power parameter of the designated sub-band occupied by the device as measured by the device in which the apparatus locates, and the first network element is the SRC.

In further, the processor 2102 is also configured to measure the power parameter of the designated sub-band occupied by the device requested in the interference measurement request received by the transceiver 2101;

The transceiver 2101 is specifically configured to, when the processor 2102 is able to measure the power parameter of the designated sub-band occupied by the device in which the apparatus locates as requested in the interference measurement request, transmit an interference measurement response message to the first network element, where, the interference measurement response message is used for reporting the power parameter of the designated sub-band occupied by the device as requested in the interference measurement request; or
when the processor 2102 is not able to measure the power parameter of the designated sub-band occupied by the device as requested in the interference measurement request, take a sub-band which is determined according to the power parameter of the requested designated sub-band and frequency spectrum sharing information of the device as the designated sub-band occupied by the device; transmit an interference measurement response message to the first network element, where, the interference measurement response message carries a power parameter of the determined designated sub-band occupied by the device.

In further, an information element IE in the interference measurement request message received by the transceiver 2101 includes one or more of the following cells: a message type, a bandwidth range of a designated sub-band occupied by a requested network element requested to be reported, and a counting unit used by the requested network element when reporting the power parameter of the occupied designated sub-band;

An information element IE in the interference measurement response message transmitted by the transceiver 2101 includes: a message type and a power parameter of the occupied designated sub-band measured by the requested network element.

In further, the information element IE in the interference measurement response message transmitted by the transceiver 2101 also includes: a segment granularity of the occupied designated sub-band measured by the requested network element.

In further, the transceiver 2101 is also configured to, before receiving the interference control request message transmitted by the first network element, receive an interference measurement request message transmitted by the first network element; and transmit an interference measurement report message to the first network element for the received interference measurement request message according to a preset transmitting rule, where, the interference measurement request message is used for requesting to report a power parameter of the designated sub-band occupied by the device in which the apparatus locates via an interference measurement report message, where, the power parameter includes at least one of a received power and a received interference power, the first network element is the SRC.

In further, the processor 2102 is also configured to measure the power parameter of the designated sub-band occupied by the device requested in the interference measurement request received by the transceiver 2101;

The transceiver 2101 is specifically configured to, when the processor 2102 is able to measure the power parameter of the designated sub-band occupied by the device in which the apparatus locates as requested in the interference measurement request, transmit an interference measurement report message to the first network element, where, the interference measurement report message is used for reporting the power parameter of the designated sub-band occupied by the device as requested in the interference measurement request; or
when the processor 2102 is not able to measure the power parameter of the designated sub-band occupied by the device as requested in the interference measurement request, take a sub-band which is determined according to the power parameter of the requested designated sub-band and frequency spectrum sharing information of the device as the designated sub-band occupied by the device; transmit an interference measurement report message to the first network element, where, the interference measurement report message carries a power parameter of the determined designated sub-band occupied by the device.

In further, an information element IE in the interference measurement request message received by the transceiver 2101 includes one or more of the following cells: a message type, a bandwidth range of a designated sub-band occupied by a requested network element requested to be reported, and a counting unit used by the requested network element when reporting the power parameter of the occupied designated sub-band;

An information element IE in the interference measurement report message transmitted by the transceiver 2101 includes: a message type and a power parameter of the occupied designated sub-band measured by the requested network element.

In further, the information element IE in the interference measurement report message transmitted by the transceiver 2101 also includes: a segment granularity of the occupied designated sub-band measured by the requested network element.

In further, the transceiver 2101 is also configured to, when there is an interfered sub-band in a bandwidth occupied by the device in which the apparatus locates, transmit an interference control request message to the first network element, where, the interference control request message is used for requesting to perform interference control to the interfered sub-band occupied by the device, and the first network element is the SRC.

In further, an information element IE in the interference control request message received by the transceiver 2101 includes one or more of the following cells: a message type, a bandwidth range of the designated sub-band occupied by a requested network element requested to be controlled, an amount of interference on the interfered sub-band, an amount of interference or an interference level that needs to be controlled by the requested network element on the occupied designated sub-band, and a counting unit used by the requested network element when reporting the amount of interference of an occupied designated sub-band as adjusted.

In further, an information element IE in the interference control response message transmitted by the transceiver 2101 includes one or more of the following cells: a message type, a bandwidth range of the occupied designated sub-band adjusted by the requested network element, adjustment amount performed to transmitted power of the occupied designated sub-band, and whether the requested network element performs an adjustment to the transmitted power of the interfered sub-band.

In further, the processor 2102 is specifically configured to: use one or more of the following manners to adjust, within the preset range, the transmitted power of an occupied designated sub-band that has been allocated by the device in which the apparatus locates: for a terminal which locates between a cell governed by the device in which the apparatus locates and a cell governed by an interfered network element, locates at an edge of the cell governed by the device in which the apparatus locates, and occupies the designated sub-band, reduce transmitted power of the terminal so that the transmitted power of the terminal is less than a preset maximum transmitted power threshold value or the transmitted power of the terminal is reduced by a preset value; for a terminal within a cell governed by the device in which the apparatus locates, adjust transmitted power of a terminal so that transmitted power of the terminal is less than a preset maximum transmitted power threshold value; for terminals which locate between a cell governed by the device in which the apparatus locates and a cell governed by an interfered network element, locate at an edge of the cell governed by the device in which the apparatus locates, and occupy the designated sub-band, reduce an amount of the terminals scheduled at a same time; when the device in which the apparatus locates is a network element in an LTE RAT communication system, for a terminal which locates between a cell governed by the device in which the apparatus locates and a cell governed by an interfered network element, locates at the cell governed by the device in which the apparatus locates, and occupies the designated sub-band, perform at least one of the following operations when performing data transmission with the terminal: reduce transmitted power of each resource block carrying data, and increase amount of resource blocks used for carrying data;

Use one or more of the following manners to allocate, within the preset range, transmitted power of the designated sub-band occupied by the device in which the apparatus locates: for a terminal in a cell governed by the device in which the apparatus locates, when it needs to allocate the designated sub-band for the terminal, control transmitted power of the terminal on the designated sub-band to be no more than a preset maximum transmitted power threshold value; for terminals in a cell governed by the device in which the apparatus locates, allocate a designated sub-band for a terminal satisfying at least one of the following conditions for use: a cell center terminal of which transmitted power is less than a preset power threshold value, a terminal having a distance which is no less than a preset distance threshold value from an interfered network element, and a terminal having a path loss difference, between a path loss to the interfered network element and a path loss to a cell in which the terminal locates, which is greater than a preset threshold, where, the preset distance threshold value is used for ensuring that there is no interference to the interfered network element when a signal transmitted from the terminal is transmitted to the interfered network element; when the interference control request message also carries time range information of a period of time that a requested network element needs to perform interference control to an occupied designated sub-band occupied, for a terminal which locates in a cell governed by the device in which the apparatus locates, allocate the designated sub-band for a terminal of which transmitted power is less than a preset power threshold value for use in the period of time that the interference control is needed.

Embodiments of the present invention provide a network element, including: the fourth apparatus for interference control described above.

Preferably, the network element according to this embodiment may be an access network element in any RAT communication system.

Embodiments of the present invention provide an SRC, including: the fifth apparatus for interference control described above.

Embodiments of the present invention provide a network element, including: the sixth apparatus for interference control described above.

Preferably, the network element according to this embodiment may be an access network element in any RAT communication system.

Functions of the described units may correspond to corresponding processing steps in the process as shown in FIG. 1, FIG. 3, FIG. 5 - FIG. 7, FIG. 10, FIG. 12 and FIG. 14, which will not be repeated herein.

Embodiments of the present invention provide a method and an apparatus for interference control, and a network element device, when a first network element and a second network element are network elements in inter-RAT communication systems, the first network element determines an interfered sub-band from a bandwidth occupied by the first network element; and transmits an interference control request message which is used for requesting the second network element to perform interference control to the interfered sub-band to the second network element; after receiving the interference control request message, the second network element performs at least one of the following operations: adjusting, within a preset range, transmitted power of the occupied designated sub-band that has been allocated by the second network element; allocating, within a preset range, the transmitted power of the designated sub-band occupied by the second network element.

When the first network element is an SRC and the second network element may be a network element in any communication system, the first network element transmits an interference control request message which is used for requesting to perform interference control to a designated sub-band occupied by the second network element to the second network element. After receiving the interference control request message transmitted by the first network element, the second network element performs at least one of the following operations: adjusting, within a preset range, transmitted power of the occupied designated sub-band that has been allocated by the second network element; allocating, within a preset range, the transmitted power of the designated sub-band occupied by the second network element. By using the methods for interference control provided in the present invention, when the first network element and the second network element are network elements in inter-RAT communication systems, interference control between the inter-RAT communication systems is implemented via a direct interaction of an interference control request message and an interference control response message between the inter-RAT network elements, when the first network element is an SRC and the second network element is a network element in any communication system, interference control between the inter-RAT communication systems is implemented via an interaction of an interference control request message and an interference control response message between the SRC and an inter-RAT network element, thereby solving a problem that there is too much interference between adjacent cells of different RATs.

Persons skilled in the art should understand that, embodiments of the present invention may be provided as a method, a system, or a computer program product. Thus, the present invention may adopt a form of totally hardware embodiments, totally software embodiments or software embodiments in combination with hardware embodiments. Moreover, the present invention may adopt a form of a computer program product which is implemented on one or more computer available storage media (including but not limited to a disk memory, a CD-ROM, an optical memory, etc.) including computer available program codes.

The present invention is described with reference to flow charts and/or block diagrams of a method, a device (system) and a computer program product according to embodiments of the present invention. It should be understood that each process and/or block in the flow charts and/or the block diagrams as well as a combination of the processes and/or the blocks in the flow charts and/or the block diagrams may be implemented by computer program instructions. The computer program instructions may be provided to a processor of a general purpose computer, a special purpose computer, an embedded processor or other programmable data processing devices to generate a machine, so that the instructions executed by the processor of the computer or other programmable data processing devices produce an apparatus used for performing a function specified in one process or more processes of the flowcharts and/or one block or more blocks of the block diagrams.

These computer program instructions may also be stored in a computer readable memory capable of directing the computer or other programmable data processing devices to operate in a particular manner, so that the instructions stored in the computer readable memory generate a manufactured product including an instruction apparatus, where the instruction apparatus performs the function specified in one process or more processes of the flow charts and/or one block or more blocks of the block diagrams.

These computer program instructions may also be loaded on the computer or other programmable data processing devices, so that a series of operating steps are executed on the computer or other programmable devices to generate processing implemented by the computer, and thus the instructions executed on the computer or other programmable devices are provided for performing steps of the function specified in one process or more processes of the flow charts and/or one block or more blocks of the block diagrams.

Although preferred embodiments have been described in the present invention, persons skilled in the art may make further changes and modifications to these embodiments once acquiring basic inventive concepts.

Obviously, persons skilled in the art may make various changes and modifications to embodiments of the present invention without departing from the scope of the embodiments of the present invention. Thus, if these changes and modifications of the embodiments of the present invention belong to the scope of the claims of the present invention, then the present invention is also intended to include these changes and modifications.

## Claims

1. A method for a first network element to perform interference control, comprising:
determining (101), by the first network element, an interfered sub-band from a bandwidth occupied by the first network element;
transmitting (102) an interference control request message to an inter-RAT network element, wherein, the interference control request message is used for requesting the inter-RAT network element to perform interference control to the interfered sub-band; the interfered sub-band is occupied by the inter-RAT network element; a communication system in which the inter-RAT network element locates and a communication system in which the first network element locates are inter-RAT communication systems;
**characterized in**
receiving an interference control response message replied by a network element capable of adjusting transmitted power of the interfered sub-band in the inter-RAT network element.

2. The method according to claim 1, wherein, an information element IE in the interference control request message comprises one or more of the following cells: a message type, a bandwidth range of an interfered sub-band requested to be controlled, an amount of interference on the interfered sub-band, an amount of interference or an interference level that needs to be controlled by a requested network element on the interfered sub-band, and a counting unit used by the requested network element when reporting a controlled amount of interference.

3. The method according to claim 1 or 2, wherein, the transmitting, by the first network element, the interference control request message to the inter-RAT network element specifically comprises:
transmitting, by the first network element, the interference control request message to the inter-RAT network element via a direct interface with the inter-RAT network element; or
transmitting, by the first network element, the interference control request message to the inter-RAT network element via an operation administration and maintenance OAM that has a connection relationship with both a communication system in which the first network element locates and a communication system in which the inter-RAT network element locates; or
transmitting, by the first network element, the interference control request message to the inter-RAT network element via a core network node that has a connection relationship with both the first network element and the inter-RAT network element, wherein, the interference control request message is carried by a radio access network information management RIM message.

4. A method for a second network element to perform interference control, comprising:
receiving (501), by the second network element, an interference control request message transmitted by a first network element, wherein the interference control request message is used for requesting to perform interference control to a designated sub-band occupied by the second network element; the designated sub-band is occupied by the first network element;
performing (502), by the second network element, at least one of the following operations:
adjusting (502), within a preset range, transmitted power of the occupied designated sub-band that has been allocated by the second network element; allocating (502), within a preset range, the transmitted power of the designated sub-band occupied by the second network element, wherein, the first network element and the second network element are network elements in inter-RAT communication systems respectively;
**characterized in**
transmitting an interference control response message to the first network element.

5. The method according to claim 4, wherein,
one or more of the following manners are used to adjust, within the preset range, the transmitted power of an occupied designated sub-band that has been allocated by the second network element:
for a terminal which locates between a cell governed by the second network element and a cell governed by an interfered network element, locates at an edge of the cell governed by the second network element, and occupies a designated sub-band, reducing transmitted power of the terminal so that the transmitted power of the terminal is less than a preset maximum transmitted power threshold value or the transmitted power of the terminal is reduced by a preset value;
for a terminal within a cell governed by the second network element, adjusting transmitted power of a terminal so that transmitted power of the terminal is less than a preset maximum transmitted power threshold value;
for terminals which locate between a cell governed by the second network element and a cell governed by an interfered network element, locate at an edge of the cell governed by the second network element, and occupy the designated sub-band, reducing an amount of the terminals scheduled at a same time;
when the second network element is a network element in an LTE RAT communication system, for a terminal which locates between a cell governed by the second network element and a cell governed by an interfered network element, locates at the cell governed by the second network element, and occupies the designated sub-band, performing at least one of the following operations when performing data transmission with the terminal: reducing transmitted power of each resource block carrying data, and increasing amount of resource blocks used for carrying data;
one or more of the following manners are used to allocate, within the preset range, transmitted power of the designated sub-band occupied by the second network element:
for a terminal in a cell governed by the second network element, when it needs to allocate a designated sub-band for the terminal, controlling transmitted power of the terminal on the designated sub-band to be no more than a preset maximum transmitted power threshold value;
for terminals in a cell governed by the second network element, allocating a designated sub-band for a terminal satisfying at least one of the following conditions for use: a cell center terminal of which transmitted power is less than a preset power threshold value, a terminal having a distance which is no less than a preset distance threshold value from an interfered network element, and a terminal having a path loss difference, between a path loss to the interfered network element and a path loss to a cell in which the terminal locates, which is greater than a preset threshold, wherein, the preset distance threshold value or the preset threshold is used for ensuring that there is no interference to the interfered network element when a signal transmitted from the terminal is transmitted to the interfered network element;
when the interference control request message also carries information of a period of time that a requested network element needs to perform interference control to an occupied designated sub-band, for a terminal which locates in a cell governed by the second network element, allocate the designated sub-band for a terminal of which transmitted power is less than a preset power threshold value for use in the period of time that the interference control is needed.

6. An interfered network element, comprising:
a determining module (1601), configured to determine an interfered sub-band from a bandwidth occupied by the determining module;
a transmitting module (1602), configured to transmit an interference control request message to an inter-RAT network element, wherein, the interference control request message is used for requesting the inter-RAT network element to perform interference control to the interfered sub-band determined by the determining module (1601); the interfered sub-band is occupied by the inter-RAT network element; a communication system in which the inter-RAT network element locates and a communication system in which the apparatus locates are inter-RAT communication systems;
**characterized in** comprising
a receiving module (1603), configured to receive an interference control response message replied by a network element capable of adjusting transmitted power of the interfered sub-band in the inter-RAT network element for the interference control request message transmitted by the transmitting module.

7. The interfered network element according to claim 6, wherein, an information element IE in the interference control request message transmitted by the transmitting module (1602) comprises one or more of the following cells: a message type, a bandwidth range of an interfered sub-band requested to be controlled, an amount of interference on the interfered sub-band, an amount of interference or an interference level that needs to be controlled by a requested network element on the interfered sub-band, and a counting unit used by the requested network element when reporting a controlled amount of interference.

8. The interfered network element according to claim 6 or claim 7, wherein, the transmitting module (1602) is specifically configured to transmit the interference control request message to the inter-RAT network element via a direct interface with the inter-RAT network element; or transmit the interference control request message to the inter-RAT network element via an operation administration and maintenance OAM that has a connection relationship with both a communication system in which the transmitting module (1602) locates and a communication system in which the inter-RAT network element locates; or transmit the interference control request message to the inter-RAT network element via a core network node that has a connection relationship with both the transmitting module (1602) and the inter-RAT network element, wherein, the interference control request message is carried by a radio access network information management RIM message.

9. An interfering network element, comprising:
a transceiving module (1801), configured to receive an interference control request message transmitted by an interfered network element, wherein the interference control request message is used for requesting to perform interference control to a designated sub-band occupied by the interfering network element; the designated sub-band is occupied by the interfered network element;
an adjusting module (1802), configured to perform at least one of the following operations: adjust, within a preset range, transmitted power of the occupied designated sub-band that has been allocated by the interfering network element; allocate, within a preset range, the transmitted power of the designated sub-band occupied by the interfering network element, wherein,
the interfered network element and the interfering network element are network elements in inter-RAT communication systems respectively;
**characterized in that**
the transceiving module is further configured to transmit an interference control response message to the interfered network element for the interference control request message received.

## Patentansprüche

1. Verfahren zum Durchführen von Interferenzsteuerung durch ein erstes Netzwerkelement, umfassend:
Bestimmen (101) eines gestörten Teilbands durch das erste Netzwerkelement aus einer vom ersten Netzwerkelement belegten Bandbreite;
Senden (102) einer Interferenzsteuerungsanforderungsnachricht zu einem Inter-RAT Netzwerkelement, wobei die Interferenzsteuerungsanforderungsnachricht verwendet wird, um das Inter-RAT-Netzwerkelement aufzufordern, Interferenzsteuerung am gestörten Teilband durchzuführen; das gestörte Teilband durch das Inter-RAT-Netzwerkelement belegt ist; ein Kommunikationssystem, in dem das Inter-RAT-Netzwerkelement positioniert ist, und ein Kommunikationssystem, in dem das erste Netzwerkelement positioniert ist, Inter-RAT-Kommunikationssysteme sind;
**gekennzeichnet durch**
Empfangen einer Interferenzsteuerungsantwortnachricht, zurückgeleitet durch ein Netzwerkelement, fähig zur Anpassung der Sendeleistung des gestörten Teilbands im Inter-RAT-Netzwerkelement.

2. Verfahren nach Anspruch 1, wobei ein Informationselement IE in der Interferenzsteuerungsanforderungsnachricht eine oder mehrere der folgenden Zellen umfasst: einen Nachrichtentyp, einen Bandbreitenbereich eines gestörten Teilbandes, dessen Steuerung angefordert worden ist, einen Umfang der Interferenz am gestörten Teilband, einen Umfang der Interferenz oder ein Interferenzniveau, die durch ein angefordertes Netzwerkelement am gestörten Teilnetz gesteuert werden sollen, und eine vom angeforderten Netzwerkelement verwendete Zähleinheit, wenn ein gesteuerter Interferenzumfang gemeldet wird.

3. Verfahren nach Anspruch 1 oder 2, wobei das Senden der Interferenzsteuerungsanforderungsnachricht durch das erste Netzwerkelement zum Senden der Interferenzsteuerungsanforderungsnachricht durch das erste Netzwerkelement zum Inter-RAT-Netzwerkelement über eine direkte Schnittstelle mit dem Inter-RAT-Nezwerkelementl; oder Inter-RAT-Netzwerkelement im Einzelnen umfasst:
Senden der Interferenzsteuerungsanforderungsnachricht durch das erste Netzwerkelement zum Inter-RAT-Netzwerkelement über Betrieb, Verwaltung und Wartung, OAM, die eine Verbindungsbeziehung sowohl mit einem Kommunikationssystem, in dem das erste Netzwerkelement positioniert ist, als auch mit einem Kommunikationssystem, in dem das Inter-RAT-Netzwerkelement positioniert ist, aufweisen; oder
Senden der Interferenzsteuerungsanforderungsnachricht durch das erste Netzwerkelement zum Inter-RAT-Netzwerkelement über einen Kernnetzknoten, der eine Verbindungsbeziehung sowohl mit dem ersten Netzwerkelement als auch mit dem Inter-RAT-Netzwerkelement aufweist, wobei die Interferenzsteuerungsanforderungsnachricht durch eine Funkzugangsnetz-Informationsverwaltungsnachricht, RIM-Nachricht, getragen wird.

4. Verfahren zum Durchführen von Interferenzsteuerung durch ein zweites Netzwerkelement, umfassend:
Empfangen (501) einer von einem ersten Netzwerkelement gesendeten Interferenzsteuerungsanforderungsnachricht durch das zweite Netzwerkelement, wobei die Interferenzsteuerungsanforderungsnachricht verwendet wird zum Anfordern der Durchführung von Interferenzsteuerung bei einem ausgewiesenen, durch das zweite Netzwerkelement belegten Teilband und das ausgewiesene Teilband vom ersten Netzwerkelement belegt ist;
Durchführen (502) von mindestens einem der folgenden Vorgänge durch das zweite Netzwerkelement:
Anpassen (502) der Sendeleistung des belegten ausgewiesenen Teilbandes, das durch das zweite Netzwerkelement zugewiesen worden ist, in einem voreingestellten Bereich; Zuordnen (502) der Sendeleistung des ausgewiesenen, durch das zweite Netzwerkelement belegten Teilbandes in einem voreingestellten Bereich, wobei das erste Netzwerkelement bzw. das zweite Netzwerkelement Netzwerkelemente in Inter-RAT-Kommunikationssystemen sind;
**gekennzeichnet durch**
Senden einer Interferenzsteuerungsantwortnachricht zum ersten Netzwerkelement.

5. Verfahren nach Anspruch 4, wobei
eine oder mehrere der folgenden Arten verwendet werden, um die Sendeleistung eines belegten ausgewiesenen Teilbandes, das durch das zweite Netzwerkelement zugeordnet worden ist, innerhalb des voreingestellten Bereichs anzupassen:
Bei einem Endgerät, das zwischen einer durch das zweite Netzwerkelement kontrollierten Zelle und einer durch ein gestörtes Netzwerkelement kontrollierten Zelle positioniert ist, das sich an einem Rand der durch das zweite Netzwerkelement kontrollierten Zelle positioniert und das ein ausgewiesenes Teilband belegt:
Reduzieren der Sendeleistung des Endgeräts, sodass die Sendeleistung des Endgeräts geringer ist als ein voreingestellter maximaler Schwellenwert der Sendeleistung oder die Sendeleistung des Endgeräts um einen voreingestellten Wert reduziert wird;
bei einem Endgerät in einer durch das zweite Netzwerkelement kontrollierten Zelle: Anpassen der Sendeleistung eines Endgeräts, sodass die Sendeleistung des Endgeräts geringer ist als ein voreingestellter maximaler Schwellenwert der Sendeleistung;
bei Endgeräten, die zwischen einer durch das zweite Netzwerkelement kontrollierten Zelle und einer durch ein gestörtes Netzwerkelement kontrollierten Zelle positioniert sind, die an einem Rand der durch das zweite Netzwerkelement kontrollierten Zelle positioniert sind und das ausgewiesene Teilband belegen: Reduzieren des Umfangs der zu einem gleichen Zeitpunkt eingeplanten Endgeräte;
wenn das zweite Netzwerkelement ein Netzwerkelement in einem LTE-RAT-Kommunikationssystem ist, bei einem Endgerät, das zwischen einer durch das zweite Netzwerkelement kontrollierten Zelle und einer durch ein gestörtes Netzwerkelement kontrollierten Zelle positioniert ist, das an der durch das zweite Netzwerkelement kontrollierten Zelle positioniert ist und das das ausgewiesene Teilband belegt, Durchführen von mindestens einem der folgenden Vorgänge bei der Durchführung von Datenübertragung mit dem Endgerät: Reduzieren der Sendeleistung von jedem Daten tragenden Ressourcenblock und Erhöhen des Umfangs von zum Tragen von Daten verwendeten Ressourcenblöcken;
Verwenden von einer oder mehreren der folgenden Arten, um die Sendeleistung des durch das zweite Netzwerkelement belegten ausgewiesenen Teilbandes innerhalb des voreingestellten Bereichs zuzuweisen:
Bei einem Endgerät in einer durch das zweite Netzwerkelement kontrollierten Zelle, wenn dieses ein ausgewiesenes Teilband für das Endgerät zuordnen soll: Steuern der Sendeleistung des Endgeräts am ausgewiesenen Teilband, sodass ein voreingestellter maximaler Schwellenwert der Sendeleistung nicht überschritten wird;
bei Endgeräten in einer durch das zweite Netzwerkelement kontrollierten Zelle: Zuweisen eines ausgewiesenen Teilbandes für ein Endgerät, das mindestens einer der folgenden Betriebsbedingungen genügt: ein Zellenzentrumsendgerät, dessen Sendeleistung geringer ist als ein voreingestellter Leistungsschwellenwert, ein Endgerät, aufweisend eine Distanz, die nicht geringer ist als ein voreingestellter Schwellenwert der Distanz von einem gestörten Netzwerkelement, und ein Endgerät, aufweisend eine Pfadverlustdifferenz zwischen einem Pfadverlust zum gestörten Netzwerkelement und einem Pfadverlust zu einer Zelle, in der das Endgerät positioniert ist, die größer ist als ein voreingestellter Schwellenwert, wobei der voreingestellte Distanzschwellenwert oder der voreingestellte Schwellenwert verwendet werden, um sicherzustellen, dass keine Interferenz zum gestörten Netzwerkelement vorliegt, wenn ein vom Endgerät gesendetes Signal zum gestörten Netzwerkelement gesendet wird;
wenn die Interferenzsteuerungsanforderungsnachricht auch Information zu einem Zeitraum trägt, über den ein angefordertes Netzwerkelement Interferenzsteuerung an einem belegten ausgewiesenen Teilband durchführen soll, bei einem Teilband, das in einer durch das zweite Netzwerkelement kontrollierten Zelle positioniert ist: Zuweisen des ausgewiesenen Teilbands zu einem Endgerät, dessen Sendeleistung geringer ist als ein voreingestellter Leistungsschwellenwert zur Verwendung in einem Zeitraum, über den die Interferenzsteuerung benötigt wird.

6. Gestörtes Netzwerkelement, umfassend:
ein Bestimmungsmodul (1601), ausgelegt zum Ermitteln eines gestörten Teilbandes aus einer durch das Bestimmungsmodul belegten Bandbreite;
ein Sendemodul (1602), ausgelegt zum Senden einer Interferenzsteuerungsanforderungsnachricht zu einem Inter-RAT-Netzwerkelement, wobei die Interferenzsteuerungsanforderungsnachricht verwendet wird, um das Inter-RAT-Netzwerkelement aufzufordern, Interferenzsteuerung am durch das Bestimmungsmodul (1601) ermittelten gestörten Teilband durchzuführen; das gestörte Teilband durch das Inter-RAT-Netzwerkelement belegt ist; ein Kommunikationssystem, in dem das Inter-RAT-Netzwerkelement positioniert ist, und ein Kommunikationssystem, in dem die Vorrichtung positioniert ist, Inter-RAT-Kommunikationssysteme sind;
**dadurch gekennzeichnet, dass** umfasst ist:
ein Empfangsmodul (1603), ausgelegt zum Empfangen einer Interferenzsteuerungsantwortnachricht, zurückgeleitet durch ein Netzwerkelement, fähig zur Anpassung der Sendeleistung des gestörten Teilbands im Inter-RAT-Netzwerkelement für die durch das Sendemodul gesendete Interferenzsteuerungsanforderungsnachricht.

7. Gestörtes Netzwerkelement nach Anspruch 6, wobei ein Informationselement IE in der durch das Sendemodul (1602) gesendeten Interferenzsteuerungsanforderungsnachricht eine oder mehrere der folgenden Zellen umfasst: einen Nachrichtentyp, einen Bandbreitenbereich eines gestörten Teilbandes, dessen Steuerung angefordert worden ist, einen Umfang der Interferenz am gestörten Teilband, einen Umfang der Interferenz oder ein Interferenzniveau, die durch ein angefordertes Netzwerkelement am gestörten Teilnetz gesteuert werden sollen, und eine vom angeforderten Netzwerkelement verwendete Zähleinheit, wenn ein gesteuerter Interferenzumfang gemeldet wird.

8. Gestörtes Netzwerkelement nach Anspruch 6 oder 7, wobei das Sendemodul (1602) im Einzelnen ausgelegt ist zum Senden der Interferenzsteuerungsanforderungsnachricht zum Inter-RAT-Netzwerkelement über eine direkte Schnittstelle mit dem Inter-RAT-Netzwerkelement; oder zum Senden der Interferenzsteuerungsanforderungsnachricht zum Inter-RAT-Netzwerkelement über Betrieb, Verwaltung und Wartung, OAM, die eine Verbindungsbeziehung sowohl mit einem Kommunikationssystem, in dem das Sendemodul (1602) positioniert ist, als auch mit einem Kommunikationssystem, in dem das Inter-RAT-Netzwerkelement positioniert ist, aufweisen; oder zum Senden der Interferenzsteuerungsanforderungsnachricht zum Inter-RAT-Netzwerkelement über einen Kernnetzknoten, der eine Verbindungsbeziehung sowohl mit dem Sendemodul (1602) als auch mit dem Inter-RAT-Netzwerkelement aufweist, wobei die Interferenzsteuerungsanforderungsnachricht durch eine Funkzugangsnetz-Informationsverwaltungsnachricht, RIM-Nachricht, getragen wird.

9. Störendes Netzwerkelement, umfassend:
ein Sendeempfängermodul (1801), ausgelegt zum Empfangen einer durch ein gestörtes Netzwerkelement gesendeten Interferenzsteuerungsanforderungsnachricht, wobei die Interferenzsteuerungsanforderungsnachricht verwendet wird, um das Durchführen von Interferenzsteuerung an einem ausgewiesenen, durch das störende Netzwerkelement belegten Teilband anzufordern, wobei das ausgewiesene Teilband durch das gestörte Netzwerkelement belegt ist;
ein Anpassungsmodul (1802), ausgelegt zum Durchführen von mindestens einem der folgenden Vorgänge: Anpassen der Sendeleistung des belegten ausgewiesenen Teilbandes, das durch das störende Netzwerkelement zugewiesen worden ist, in einem voreingestellten Bereich; Zuordnen der Sendeleistung des ausgewiesenen, durch das störende Netzwerkelement belegten Teilbandes in einem voreingestellten Bereich,
wobei
das gestörte Netzwerkelement bzw. das störende Netzwerkelement Netzwerkelemente in Inter-RAT-Kommunikationssystemen sind;
**dadurch gekennzeichnet, dass**
das Sendeempfängermodul ferner ausgelegt ist zum Senden einer Interferenzsteuerungsantwortnachricht für die empfangene Interferenzsteuerungsanforderungsnachricht zum gestörten Netzwerkelement.

## Revendications

1. Procédé pour un premier élément de réseau pour réaliser un contrôle de brouillage consistant à :
déterminer (101), par le premier élément de réseau, une sous-bande brouillée à partir d'une bande passante occupée par le premier élément de réseau ;
émettre (102) un message de demande de contrôle de brouillage vers un élément de réseau inter-RAT, le message de demande de contrôle de brouillage étant utilisé pour demander à l'élément de réseau inter-RAT de réaliser un contrôle de brouillage sur la sous-bande brouillée ; la sous-bande brouillée étant occupée par l'élément de réseau inter-RAT ; un système de communication où se trouve l'élément de réseau inter-RAT et un système de communication où se trouve le premier élément de réseau étant des systèmes de communication inter-RAT ;
**caractérisé par** l'étape consistant à :
recevoir un message de réponse de contrôle de brouillage répondu par un élément de réseau capable de régler une puissance émise de la sous-bande brouillée dans l'élément de réseau inter-RAT.

2. Procédé selon la revendication 1, dans lequel un élément d'information (IE) dans le message de demande de contrôle de brouillage comprend une ou plusieurs des cellules suivantes : un type de message, une plage de bande passante d'une sous-bande brouillée dont le contrôle a été demandé, une quantité de brouillage sur la sous-bande brouillée, une quantité de brouillage ou un niveau de brouillage qui doit être contrôlé(e) par un élément de réseau demandé sur la sous-bande brouillée, et une unité de comptage utilisée par l'élément de réseau demandé lors du signalement d'une quantité contrôlée de brouillage.

3. Procédé selon la revendication 1 ou 2, dans lequel l'émission, par le premier élément de réseau, du message de demande de contrôle de brouillage vers l'élément de réseau inter-RAT consiste spécifiquement à :
émettre, par le premier élément de réseau, le message de demande de contrôle de brouillage vers l'élément de réseau inter-RAT par l'intermédiaire d'une interface directe avec l'élément de réseau inter-RAT ; ou
émettre, par le premier élément de réseau, le message de demande de contrôle de brouillage vers l'élément de réseau inter-RAT par l'intermédiaire d'une opération, administration et maintenance (OAM) qui possède une relation de connexion à la fois avec un système de communication où se trouve le premier élément de réseau et un système de communication où se trouve l'élément de réseau inter-RAT ; ou
émettre, par le premier élément de réseau, le message de demande de contrôle de brouillage vers l'élément de réseau inter-RAT par l'intermédiaire d'un noeud de réseau central qui possède une relation de connexion à la fois avec le premier élément de réseau et l'élément de réseau inter-RAT, le message de demande de contrôle de brouillage étant transporté par un message de gestion d'informations de réseau d'accès radio (RIM).

4. Procédé pour un second élément de réseau pour réaliser un contrôle de brouillage consistant à :
recevoir (501), par le second élément de réseau, un message de demande de contrôle de brouillage émis par un premier élément de réseau, le message de demande de contrôle de brouillage étant utilisé pour demander la réalisation d'un contrôle de brouillage sur une sous-bande désignée occupée par le second élément de réseau ; la sous-bande désignée étant occupée par le premier élément de réseau ;
réaliser (502), par le second élément de réseau, au moins une des opérations suivantes :
régler (502), dans une plage prédéfinie, une puissance d'émission de la sous-bande désignée occupée qui a été affectée par le second élément de réseau ; affecter (502), dans une plage prédéfinie, la puissance d'émission de la sous-bande désignée occupée par le second élément de réseau, le premier élément de réseau et le second élément de réseau étant respectivement des éléments de réseau dans des systèmes de communication inter-RAT ;
**caractérisé par** l'étape consistant à :
émettre un message de réponse de contrôle de brouillage vers le premier élément de réseau.

5. Procédé selon la revendication 4, dans lequel :
une ou plusieurs des manières suivantes sont utilisées pour régler, dans la plage prédéfinie, la puissance émise d'une sous-bande désignée occupée qui a été affectée par le second élément de réseau :
pour un terminal qui se trouve entre une cellule régie par le second élément de réseau et une cellule régie par un élément de réseau brouillé, qui se trouve au niveau d'une périphérie de la cellule régie par le second élément de réseau, et qui occupe une sous-bande désignée, réduire la puissance émise du terminal de sorte que la puissance émise du terminal soit inférieure à une valeur-seuil de puissance émise maximale prédéfinie ou que la puissance émise du terminal soit réduite d'une valeur prédéfinie ;
pour un terminal qui se trouve dans une cellule régie par le second élément de réseau, régler la puissance émise d'un terminal de sorte que la puissance émise du terminal soit inférieure à une valeur-seuil de puissance émise maximale prédéfinie ;
pour des terminaux qui se trouvent entre une cellule régie par le second élément de réseau et une cellule régie par un élément de réseau brouillé, qui se trouvent au niveau d'une périphérie de la cellule régie par le second élément de réseau, et qui occupent la sous-bande désignée, réduire un nombre des terminaux planifiés en même temps ;
quand le second élément de réseau est un élément de réseau dans un système de communication RAT LTE, pour un terminal qui se trouve entre une cellule régie par le second élément de réseau et une cellule régie par un élément de réseau brouillé, qui se trouve au niveau de la cellule régie par le second élément de réseau, et qui occupe la sous-bande désignée, réaliser au moins une des opérations suivantes lors de la réalisation d'une transmission de données avec le terminal : réduire la puissance émise de chaque bloc de ressources transportant des données, et augmenter un nombre de blocs de ressources utilisés pour transporter des données ;
une ou plusieurs des manières suivantes sont utilisées pour affecter, dans la plage prédéfinie, une puissance émise de la sous-bande désignée occupée par le second élément de réseau :
pour un terminal qui se trouve dans une cellule régie par le second élément de réseau, quand il doit affecter une sous-bande désignée au terminal, contrôler la puissance émise du terminal sur la sous-bande désignée de sorte qu'elle ne soit pas supérieure à une valeur-seuil de puissance émise maximale prédéfinie ;
pour des terminaux qui se trouvent dans une cellule régie par le second élément de réseau, affecter une sous-bande désignée à un terminal satisfaisant au moins une des conditions suivantes lors de l'utilisation : un terminal central cellulaire dont la puissance émise est inférieure à une valeur-seuil de puissance prédéfinie, un terminal dont une distance par rapport à un élément de réseau brouillé n'est pas inférieure à une valeur-seuil de distance prédéfinie, et un terminal ayant une différence d'affaiblissement de propagation, entre un affaiblissement de propagation jusqu'à l'élément de réseau brouillé et un affaiblissement de propagation jusqu'à une cellule où se trouve le terminal, qui est supérieure à un seuil prédéfini, la valeur-seuil de distance prédéfinie ou le seuil prédéfini étant utilisé(e) pour s'assurer qu'il n'y a pas de brouillage jusqu'à l'élément de réseau brouillé quand un signal émis par le terminal est émis vers l'élément de réseau brouillé ;
quand le message de demande de contrôle de brouillage transporte également une information sur une période de temps requise par un élément de réseau demandé pour réaliser un contrôle de brouillage sur une sous-bande désignée occupée, pour un terminal qui se trouve dans une cellule régie par le second élément de réseau, affecter la sous-bande désignée à un terminal dont la puissance émise est inférieure à une valeur-seuil de puissance prédéfinie lors de l'utilisation dans la période de temps requise pour le contrôle de brouillage.

6. Élément de réseau brouillé, comprenant :
un module de détermination (1601), configuré pour déterminer une sous-bande brouillée à partir d'une bande passante occupée par le module de détermination ;
un module d'émission (1602), configuré pour émettre un message de demande de contrôle de brouillage à un élément de réseau inter-RAT, le message de demande de contrôle de brouillage étant utilisé pour demander à l'élément de réseau inter-RAT de réaliser un contrôle de brouillage sur la sous-bande brouillée déterminée par le module de détermination (1601) ; la sous-bande brouillée étant occupée par l'élément de réseau inter-RAT ; un système de communication où se trouve l'élément de réseau inter-RAT et un système de communication où se trouve l'appareil étant des systèmes de communication inter-RAT ;
**caractérisé en ce qu'**il comprend :
un module de réception (1603), configuré pour recevoir un message de réponse de contrôle de brouillage répondu par un élément de réseau capable de régler une puissance émise de la sous-bande brouillée dans l'élément de réseau inter-RAT pour le message de demande de contrôle de brouillage émis par le module d'émission.

7. Élément de réseau brouillé selon la revendication 6, dans lequel un élément d'information (IE) dans le message de demande de contrôle de brouillage émis par le module d'émission (1602) comprend une ou plusieurs des cellules suivantes : un type de message, une plage de bande passante d'une sous-bande brouillée dont le contrôle a été demandé, une quantité de brouillage sur la sous-bande brouillée, une quantité de brouillage ou un niveau de brouillage qui doit être contrôlé(e) par un élément de réseau demandé sur la sous-bande brouillée, et une unité de comptage utilisée par l'élément de réseau demandé lors du signalement d'une quantité contrôlée de brouillage.

8. Élément de réseau brouillé selon la revendication 6 ou 7, dans lequel le module d'émission (1602) est spécifiquement configuré pour émettre le message de demande de contrôle de brouillage vers l'élément de réseau inter-RAT par l'intermédiaire d'une interface directe avec l'élément de réseau inter-RAT ; ou émettre le message de demande de contrôle de brouillage vers l'élément de réseau inter-RAT par l'intermédiaire d'une opération, administration et maintenance (OAM) qui possède une relation de connexion à la fois avec un système de communication où se trouve le module d'émission (1602) et un système de communication où se trouve l'élément de réseau inter-RAT ; ou émettre le message de demande de contrôle de brouillage à l'élément de réseau inter-RAT par l'intermédiaire d'un noeud de réseau central qui possède une relation de connexion à la fois avec le module d'émission (1602) et l'élément de réseau inter-RAT, le message de demande de contrôle de brouillage étant transporté par un message de gestion d'informations de réseau d'accès radio (RIM).

9. Élément de réseau brouilleur, comprenant :
un module d'émission-réception (1801), configuré pour recevoir un message de demande de contrôle de brouillage émis par un élément de réseau brouillé, le message de demande de contrôle de brouillage étant utilisé pour demander la réalisation d'un contrôle de brouillage sur une sous-bande désignée occupée par l'élément de réseau brouilleur ; la sous-bande désignée étant occupée par l'élément de réseau brouillé ;
un module de réglage (1802), configuré pour réaliser au moins une des opérations suivantes : régler, dans une plage prédéfinie, une puissance émise de la sous-bande désignée occupée qui a été affectée par l'élément de réseau brouilleur ; affecter, dans une plage prédéfinie, la puissance émise de la sous-bande désignée occupée par l'élément de réseau brouilleur,
l'élément de réseau brouillé et l'élément de réseau brouilleur étant respectivement des éléments de réseau dans des systèmes de communication inter-RAT ;
**caractérisé en ce que** :
le module d'émission-réception est en outre configuré pour émettre un message de réponse de contrôle de brouillage vers l'élément de réseau brouillé pour le message de demande de contrôle de brouillage reçu.
